# EUROPÄISCHE PATENTSCHRIFT

(11) **EP 3 641 494 B1**
(45) Veröffentlichungstag und Bekanntmachung des Hinweises auf die Patenterteilung: **23.03.2022**
(21) Anmeldenummer: 19200915.7
(22) Anmeldetag: 01.10.2019
(51) Int. Cl.: H05B 6/06

(54) **GARGERÄTEVORRICHTUNG**
COOKING DEVICE
DISPOSITIF FORMANT APPAREIL DE CUISSON

(30) Priorität: 17.10.2018 ES 201831004
(43) Veröffentlichungstag der Anmeldung: 22.04.2020
(73) Patentinhaber: BSH Hausgeräte GmbH, 81739 München (DE)
(72) Erfinder: Abellanas Sanchez, Andres, 50009 Zaragoza (ES); Dominguez Vicente, Alberto, 50008 Zaragoza (ES); Imaz Martinez, Eduardo, 31500 Tudela (Navarra) (ES); Peinado Adiego, Ramon, 50008 Zaragoza (ES); Villa Lopez, Jorge, 22700 Jaca (Huesca) (ES)

(56) Entgegenhaltungen:
- EP-A1- 2 209 350
- EP-A1- 2 779 787
- EP-A2- 2 911 472
- WO-A1-2010/069616
- DE-A1-102008 042 512

## Beschreibung

Die Erfindung betrifft eine Gargerätevorrichtung nach Anspruch 1 und ein Verfahren zu einem Betrieb einer Gargerätevorrichtung nach Anspruch 12.

Aus dem Stand der Technik sind bereits Kochfelder bekannt, welche Induktoren aufweisen, welche zur Vermeidung von akustisch wahrnehmbaren Kopplungsgeräuschen mit aneinander angepassten Heizfrequenzen betrieben werden. Die Druckschrift EP 1 951 003 B1 offenbart ein Verfahren zu einem gleichzeitigen, induktiven Betrieb von zwei Induktoren eines Induktionskochfelds zur Vermeidung einer Entstehung von Kopplungsgeräuschen und einer zeitlich ungleichmäßigen Stromnetzbelastung, wobei bei dem Verfahren in einem ersten Zeitintervall die Induktoren gemeinsam mit einer ersten Heizfrequenz und in einem zweiten Zeitintervall mit einer zweiten, von der ersten Heizfrequenz verschiedenen Heizfrequenz betrieben werden. Ferner offenbart in diesem Zusammenhang die Druckschrift US 7,910,865 B2 eine Methode zum Betrieb eines Induktionskochfelds, bei welcher die Induktoren während eines Modus mit einer gemeinsamen Heizfrequenz und während eines weiteren Modus jeweils mit verschiedenen Heizfrequenzen betrieben werden, wobei die Heizfrequenzen einen Frequenzabstand zwischen 15 kHz und 25 kHz aufweisen.

Aus der WO 2010/069616 A1 ist ein Kochfeld mit mehreren Induktoren und mit wenigstens drei von den Induktoren betriebenen Heizzonen bekannt, wobei die Induktoren von einer einzigen Leistungselektronik-Baugruppe mit einem für die Induktoren gemeinsam verwendeten Gleichrichter zum Gleichrichten einer von einer einzigen Phase eines Haushaltsstromnetzes gelieferten Wechselspannung mit Heizströmen versorgt werden.

Aus der DE 10 2008 042 512 A1 ist ein Kochfeld bekannt mit mehreren zu einer Heizzone zusammengefassten Heizelementen, wenigstens einer Stromversorgungseinheit zum Erzeugen eines Heizstroms zum Betreiben der Heizelemente, einer Schalteinheit zum Öffnen und Schließen eines die wenigstens eine Stromversorgungseinheit und wenigstens eines der Heizelemente umfassenden Stromkreises und einer Steuereinheit mit Mitteln zum Bestimmen der Kenngröße des Heizstroms und Mitteln zum Betätigen der Schalteinheit abhängig von einer zum Betreiben der Heizzone gewählten Leistungsstufe.

Die Aufgabe der Erfindung besteht insbesondere darin, eine gattungsgemäße Gargerätevorrichtung mit verbesserten Eigenschaften hinsichtlich einer Ansteuerung bereitzustellen. Die Aufgabe wird erfindungsgemäß durch die Merkmale des Anspruchs 1 und 14 gelöst, während vorteilhafte Ausgestaltungen und Weiterbildungen der Erfindung den Unteransprüchen entnommen werden können.

Es wird eine Gargerätevorrichtung, insbesondere eine Induktionsgargerätevorrichtung und vorzugsweise eine Kochfeldvorrichtung, vorgeschlagen, mit einer Steuereinheit, welche zu einer Ansteuerung und Energieversorgung zumindest eines ersten Induktionsziels aus einer ersten Energiequelle und zumindest eines zweiten Induktionsziels aus einer zweiten Energiequelle vorgesehen ist, und mit einer Erfassungseinheit zur Bestimmung einer Kopplungskenngröße einer Kopplung zwischen den Induktionszielen, wobei die Steuereinheit dazu vorgesehen ist, die Kopplungskenngröße auszuwerten und im Falle eines Vorhandenseins einer Kopplung zwischen dem ersten Induktionsziel und dem zweiten Induktionsziel in zumindest einen speziellen Betriebszustand überzugehen, um Kopplungsgeräusche wenigstens zu reduzieren durch zumindest eine spezielle, insbesondere periodische, Ansteuerung der Induktionsziele und insbesondere eine den Energiequellen entnommene durchschnittliche Leistung konstant zu halten und/oder vorteilhaft einen Flicker zu minimieren und/oder zu vermeiden.

Durch die erfindungsgemäße Ausgestaltung kann eine gattungsgemäße Gargerätevorrichtung mit verbesserten Eigenschaften hinsichtlich einer insbesondere vereinfachten Ansteuerung, insbesondere hinsichtlich eines geräuscharmen Betriebs, insbesondere im Fall einer vorhandenen Kopplung zwischen zumindest zwei Induktionszielen, bereitgestellt werden. Insbesondere kann eine einfache Leistungskontrolle ermöglicht werden. Zudem können akustische Kopplungsgeräusche aufgrund einer insbesondere magnetischen Kopplung reduziert werden. Hierdurch kann insbesondere eine unvorteilhafte akustische Belastung eines Bedieners vermieden werden, wodurch insbesondere ein hoher Bedienkomfort sowie insbesondere ein positiver Eindruck bei dem Bediener insbesondere hinsichtlich einer akustischen Qualität erreicht werden kann. Aufgrund einer konstanten Gesamtleistung kann insbesondere eine vorteilhaft gleichmäßige Belastung eines Versorgungsstromnetzes erfolgen. Vorzugsweise kann Flicker, insbesondere nach der DIN EN 61000-3-3-Norm, durch eine vorteilhafte Steuerung von einzelnen Induktionszielen vermieden werden. Ferner können akustische Kopplungsgeräusche aufgrund von Intermodulationen zwischen mit unterschiedlichen Heizfrequenzen betriebenen Induktionszielen im Fall einer insbesondere magnetischen Kopplung vermieden werden. Zudem kann eine flexible und einfache Einstellung einer von einem Induktor erzeugten Heizleistung erreicht werden. Insbesondere kann eine zuverlässige Ausgestaltung vorzugsweise in Bezug auf eine durch den Bediener angeforderte Sollheizleistung erzielt werden. Insbesondere können mehrere Induktionsziele vorteilhaft geräuscharm und mit einer schwankungsarmen Belastung eines Versorgungsnetzes gemeinsam gleichzeitig betrieben werden.

Insbesondere kann eine Vielzahl an ersten Induktionszielen und an zweiten Induktionszielen vorhanden sein, wobei die ersten Induktionsziele alle aus der ersten Energiequelle und die zweiten Induktionsziele alle aus der zweiten Energiequelle mit der elektrischen Energie versorgbar sind. Insbesondere können weitere Induktionsziele vorhanden sein, welche aus weiteren, von der ersten und der zweiten Energiequelle verschiedenen Energiequellen mit der elektrischen Energie versorgbar sind.

Insbesondere können zumindest ein erstes und ein zweites Induktionsziel miteinander, insbesondere magnetisch und/oder elektromagnetisch, koppeln. Bei einem Unterschreiten eines, insbesondere durch eine Steuereinheit festgelegten, Grenzabstands zwischen den Gargeschirren, bei welchem ein Überschreiten eines festgelegten Grenzwerts der Kopplungskenngröße erfolgt, kann eine Kopplung entstehen, bei welcher insbesondere Kopplungsgeräusche auftreten können. Insbesondere ist die Kopplung zwischen dem ersten und dem zweiten Induktionsziel und/oder zwischen dem ersten und dem zweiten Gargeschirr von einem gegenseitigen Abstand des ersten und des zweiten Induktionsziels und/oder des ersten und des zweiten Gargeschirrs abhängig. Insbesondere überträgt das durch das erste Induktionsziel für das über dem ersten Induktionsziel angeordnete erste Gargeschirr bereitgestellte magnetische Feld im Falle eines Vorhandenseins der Kopplung Energie an das zweite, über dem zweiten Induktionsziel platzierte Gargeschirr und umgekehrt. **Insbesondere ist dabei das zweite Induktionsziel und insbesondere das zweite Gargeschirr in einem gekoppelten Zustand mit zwei unterschiedlichen Heizfrequenzen betrieben, mit welchen jeweils das erste und zweite Induktionsziel betrieben sind, und umgekehrt.** Insbesondere ist das erste Induktionsziel aus der ersten Energiequelle und das zweite Induktionsziel aus der zweiten Energiequelle jeweils mit einer elektrischen Energie versorgbar.

Unter einer "Gargerätevorrichtung", vorteilhaft unter einer "Kochfeldvorrichtung" und besonders vorteilhaft unter einer "Induktionskochfeldvorrichtung" soll insbesondere zumindest ein Teil, insbesondere eine Unterbaugruppe, eines Gargeräts, insbesondere eines Backofens, beispielsweise eines Induktionsbackofens, und vorteilhaft eines Kochfelds und besonders vorteilhaft eines Induktionskochfelds, verstanden werden. Vorteilhaft handelt es sich bei einem die Gargerätevorrichtung aufweisenden Haushaltsgerät um ein Gargerät. Ein als Gargerät ausgebildetes Haushaltsgerät könnte beispielsweise ein Backofen und/oder eine Mikrowelle und/oder ein Grillgerät und/oder ein Dampfgargerät sein. Vorteilhaft ist ein als Gargerät ausgebildetes Haushaltsgerät ein Kochfeld und vorzugsweise ein Induktionskochfeld.

Unter einer "Steuereinheit" soll insbesondere eine elektronische Einheit verstanden werden, die vorzugsweise in einer Steuer- und/oder Regeleinheit einer Gargerätevorrichtung, insbesondere einer Kochfeldvorrichtung, vorteilhaft einer Induktionskochfeldvorrichtung, zumindest teilweise integriert ist und die insbesondere dazu vorgesehen ist, zumindest eine Wechselrichtereinheit der Gargerätevorrichtung mit zumindest einem Wechselrichter, insbesondere einem Resonanzinverter und/oder einem dualen Halbbrückeninverter, zu steuern und/oder zu regeln. Insbesondere wertet die Steuereinheit ein von einer Einheit, insbesondere von einer Sensor- und/oder Erfassungseinheit, bereitgestelltes Signal aus, wonach die Steuereinheit insbesondere bei einem Erfüllen zumindest einer Bedingung einen speziellen Vorgang und/oder Betriebszustand initiieren kann. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden.

Insbesondere kann die Gargerätevorrichtung eine Schalteinheit aufweisen. Insbesondere ist die Schalteinheit durch die Steuereinheit gesteuert, wobei die Schalteinheit insbesondere eine elektrische Verbindung zwischen zumindest einer Energiequelle und zumindest einem Energieverbraucher, beispielsweise dem Induktionsziel, herstellt. Die Schalteinheit kann insbesondere zumindest ein elektromechanisches oder auf Halbleiter basierendes Schaltelement aufweisen und dazu vorgesehen sein, zumindest eine elektrische Verbindung zwischen zumindest der einen Energiequelle und zumindest dem einen Induktionsziel herzustellen. Unter einem "Schaltelement" soll insbesondere ein Element verstanden werden, das dazu vorgesehen ist, zwischen zwei Punkten, insbesondere Kontakten des Schaltelements, eine elektrisch leitende Verbindung herzustellen und/oder zu trennen. Vorzugsweise weist das Schaltelement zumindest einen Steuerkontakt auf, über den es geschaltet werden kann. Insbesondere ist das Schaltelement als Halbleiterschaltelement, insbesondere als Transistor, beispielsweise als Metall-Oxid-Halbleiter-Feldeffekttransistor (MOSFET), vorteilhaft als Bipolartransistor mit vorzugsweise isolierter Gate-Elektrode (IGBT), ausgebildet. Alternativ ist das Schaltelement als mechanisches und/oder elektromechanisches Schaltelement, insbesondere als ein Relais ausgebildet.

Unter einem "Induktionsziel" soll hier insbesondere ein Induktor oder eine Vielzahl von Induktoren mit einem über dem Induktor und/oder der Vielzahl von Induktoren aufgestellten Geschirr verstanden werden, wobei der Induktor oder die Vielzahl von Induktoren in zumindest einem insbesondere speziellen Betriebszustand gemeinsam dazu vorgesehen sind, das über dem Induktor oder der Vielzahl an Induktoren aufgestellte Gargeschirr induktiv zu beheizen. Dabei können die Induktoren des Induktionsziels im Vergleich untereinander in zumindest einem speziellen Betriebszustand jeweils eine gleiche Heizleistung bereitstellen. Vorteilhaft steuert die Steuereinheit die Induktoren des Induktionsziels mit einer gleichen Heizfrequenz an. Ferner kann insbesondere ein einzelner Induktor des Induktionsziels zeitlich während zumindest des speziellen Betriebszustands eine unterschiedliche Heizleistung liefern.

Unter einem "Induktor" soll hier insbesondere ein Element verstanden werden, welches in wenigstens einem Betriebszustand zumindest einem Gargeschirr Energie zum Zweck einer Beheizung des Gargeschirrs zuführt insbesondere in Form eines magnetischen Wechselfelds, das dazu vorgesehen ist, in einem metallischen, vorzugsweise zumindest teilweise ferromagnetischen, Heizmittel, insbesondere einem Gargeschirr, Wirbelströme und/oder Ummagnetisierungseffekte hervorzurufen, die in Wärme umgewandelt werden. Der Induktor weist insbesondere zumindest eine Induktionsspule auf und ist insbesondere dazu vorgesehen, Energie in Form eines magnetischen Wechselfelds mit einer Heizfrequenz dem Gargeschirr zuzuführen. Der Induktor ist insbesondere unterhalb und vorteilhaft in einem Nahbereich zumindest einer Aufstellplatte der Gargerätevorrichtung angeordnet. Vorteilhaft weist die Gargerätevorrichtung eine Vielzahl an Induktoren auf, welche insbesondere matrixartig angeordnet sein können, wobei die matrixartig angeordneten Induktoren eine variable Kochfläche bilden können. Insbesondere sind die Induktoren zu beliebig großen Induktionszielen, insbesondere mit unterschiedlichen Konturen, miteinander kombinierbar.

Unter einer "Energiequelle" soll insbesondere eine Einheit verstanden werden, welche eine elektrische Energie in Form einer elektrischen Spannung, eines elektrischen Stroms und/oder eines elektrischen und/oder elektromagnetischen Feldes zumindest einer weiteren Einheit und/oder zumindest einem elektrischen Stromkreis bereitstellt.

Unter einer "Erfassungseinheit" soll insbesondere eine Einheit verstanden werden, welche insbesondere zumindest eine Kopplungskenngröße, vorzugsweise zumindest eine physikalische, beispielsweise eine elektrische, eine magnetische und/oder eine elektromagnetische Größe erfasst und insbesondere der Steuereinheit bereitstellt. Die Erfassungseinheit könnte zumindest einen Sensor aufweisen, welcher beispielsweise dazu vorgesehen sein kann, ein magnetisches und/oder ein elektromagnetisches Feld oder eine Kenngröße des magnetischen Felds und/oder des elektromagnetischen Felds zu erfassen. Unter einer "Kopplungskenngröße" soll insbesondere eine Kenngröße verstanden werden, welche ein Vorhandensein, ein Fehlen und/oder eine Stärke einer, insbesondere magnetischen und/oder elektromagnetischen, Kopplung insbesondere zwischen zumindest zwei Induktionszielen definiert.

Unter einem "speziellen Betriebszustand" soll insbesondere ein Betriebszustand verstanden werden, welcher eintritt, nachdem die Steuereinheit eine Kopplungskenngröße ausgewertet hat und den Fall eines Vorhandenseins einer Kopplung insbesondere zwischen zumindest zwei Induktionszielen, welche aus unterschiedlichen Energiequellen mit elektrischer Energie zu versorgen sind, feststellt, wobei ein Grenzwert der Kopplungsgröße erreicht und/oder über- oder unterschritten ist, wobei insbesondere die zumindest zwei Induktionsziele aufeinander abgestimmt von der Steuereinheit ansteuerbar sind. In dem speziellen Betriebszustand erfolgt eine spezielle Ansteuerung einer Einheit, insbesondere der zumindest zwei Induktionsziele, und/oder es wird ein spezielles Verfahren und/oder Algorithmus auf die Einheit angewandt, wobei insbesondere die Steuereinheit die zumindest zwei Induktionsziele aufeinander abgestimmt betreibt. Bei einem NichtVorhandensein der Kopplung zwischen den zumindest zwei Induktionszielen leitet die Steuereinheit einen, insbesondere normalen, Betriebszustand ein, in welchem die Steuereinheit die zumindest zwei Induktionsziele unabhängig voneinander, insbesondere gleichzeitig und insbesondere jeweils mit einer eigenen Heizfrequenz, betreibt.

Unter einem "Kopplungsgeräusch" soll insbesondere ein für den Menschen und insbesondere für Haustiere mit einem durchschnittlichen Gehör wahrnehmbares akustisches Intermodulationsgeräusch verstanden werden, welches durch Intermodulation von Heizfrequenzen, insbesondere aufgrund einer elektrischen Versorgung von Induktionszielen, entstehen kann und eine Intermodulationsfrequenz insbesondere zwischen 10 Hz und 65 kHz und bevorzugt zwischen 20 Hz und 20 kHz aufweist.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Darüber hinaus wird vorgeschlagen, dass das erste Induktionsziel zumindest einen ersten Induktor aufweist, welcher insbesondere Teil der Gargerätevorrichtung und Teil der Erfassungseinheit ist. Vorzugsweise umfasst die Erfassungseinheit sämtliche Induktoren der Gargerätevorrichtung, insbesondere des Kochfelds. Insbesondere kann die Erfassungseinheit mit einer Topferkennungseinheit der Gargerätevorrichtung einstückig ausgebildet sein. Vorteilhaft kann die Steuereinheit ein von der Topferkennungseinheit bereitgestelltes Signal zur Bestimmung der Kopplung zwischen zumindest zwei Induktionszielen verwenden. Hierdurch kann insbesondere eine bauteilsparende und dadurch eine kompakte Konstruktion realisiert werden.

Zudem wird vorgeschlagen, dass das zweite Induktionsziel zumindest einen zweiten Induktor aufweist, welcher insbesondere Teil der Gargerätevorrichtung ist, wobei die Erfassungseinheit dazu vorgesehen ist, ein von dem zweiten Induktor in den ersten Induktor eingekoppeltes Signal als Kopplungskenngröße bereitzustellen. Hierdurch kann insbesondere eine unmittelbare Messung einer, insbesondere magnetischen und/oder elektromagnetischen, Kopplung zwischen zumindest zwei Gargeschirren erfolgen. Insbesondere kann der erste und/oder zweite Induktor eine Kenngröße, vorteilhaft eine Koppelkenngröße, detektieren. Der erste und/oder zweite Induktor kann alternativ oder zusätzlich beispielsweise eine Temperaturkenngröße, Gargeschirrpräsenzkenngröße und/oder eine Gargeschirrerkennungskenngröße detektieren.

Die Gargerätevorrichtung weist eine Positionserfassungseinheit zur Erfassung einer Position der Gargeschirre der Induktionsziele auf, welche Teil der Erfassungseinheit ist. Hierdurch kann insbesondere eine kompakte und insbesondere kostengünstige Konstruktion ermöglicht werden. Insbesondere kann die Positionserfassungseinheit einen Abstandssensor insbesondere zur Messung eines Abstands zwischen zwei aufgestellten Gargeschirren aufweisen. Alternativ oder zusätzlich kann die Steuereinheit dazu vorgesehen sein, aus Positionsdaten von aufgestellten Gargeschirren einen wechselseitigen Abstand der Gargeschirre zu bestimmen und/oder zu errechnen. Die Position kann insbesondere mittels einer Kamera, welche Teil der Positionserfassungseinheit sein kann, erfassbar sein. Die Position kann mittelbar, insbesondere mittels in der Steuereinheit gespeicherten relativen Anständen von einzelnen Induktoren, bestimmbar sein. Insbesondere kann die Positionserfassungseinheit eine absolute und/oder relative Position der Induktionsziele bestimmen. Insbesondere kann die Positionserfassungseinheit eine Ausdehnung des jeweiligen Induktionsziels und dadurch einen gegenseitigen Abstand zwischen den Induktionszielen bestimmen.

Die Kopplungskenngröße umfasst eine erste Position des ersten Induktionsziels und eine zweite Position des zweiten Induktionsziels. Hierdurch kann insbesondere ein gegenseitiger Abstand zwischen den Induktionszielen und insbesondere zwischen den über den Induktionszielen aufgestellten Gargeschirren bestimmbar sein, wodurch eine, insbesondere magnetische, Kopplung ermittelt werden kann, welche erfahrungsgemäß umso größer ist, je kleiner ein gegenseitiger Abstand von Gargeschirren ist. Die Positionen können beispielsweise durch eine Ermittlung von Koordinaten und/oder durch eine Ermittlung einer relativen Position zu einem Bezugspunkt und/oder -fläche bestimmbar sein. Vorteilhaft besteht zwischen der Kopplung zwischen den jeweils über dem ersten und dem zweiten Induktionsziel abgestellten Geschirren und der Position der Induktionszielen und damit insbesondere der Gargeschirre ein funktionaler und/oder empirischer Zusammenhang.

Weiterhin wird vorgeschlagen, dass die erste Energiequelle eine erste elektrische Stromphase eines Stromversorgungsnetzes und die zweite Energiequelle ist entweder die gleiche erste elektrische Stromphase eines Stromversorgungsnetzes oder eine zweite elektrische Stromphase des Stromversorgungsnetzes. Hierdurch kann insbesondere eine gleichmäßige Belastung des Stromversorgungsnetzes, insbesondere eines Hausstromnetzes erfolgen. Insbesondere kann die erste und zweite Energiequelle jeweils eine maximale Leistung von 3,7 kW liefern. Vorteilhaft kann jeweils zwischen der Energiequelle und dem Induktionsziel ein Wechselrichter angeordnet sein zur Bereitstellung einer hochfrequenten Versorgungsspannung mit einer geeigneten Heizfrequenz. Insbesondere sind die erste und zweite Energiequelle unabhängig voneinander.

Außerdem wird vorgeschlagen, dass die Gargerätevorrichtung zumindest eine erste Wechselrichtereinheit, welche Teil der ersten Energiequelle ist, und zumindest eine zweite Wechselrichtereinheit, welche Teil der zweiten Energiequelle ist, aufweist. Insbesondere können die erste und/oder zweite Wechselrichtereinheit zumindest einen, insbesondere auch jeweils mehrere, Wechselrichter aufweisen zur Bereitstellung einer hochfrequenten Versorgungsspannung mit einer geeigneten Heizfrequenz für das erste und/oder zweite Induktionsziel. Hierdurch kann insbesondere eine unabhängige Bereitstellung einer elektrischen Energie in Form einer hochfrequenten Versorgungsspannung mit einer einstellbaren Heizfrequenz erfolgen. Insbesondere kann die erste und zweite Wechselrichtereinheit mit einer gemeinsamen elektrischen Stromphase verbunden sein.

Eine flexible Ansteuerung des ersten und/oder des zweiten Induktionsziels und/oder insbesondere eine vorteilhafte Heizleistungssteuerung kann insbesondere dadurch erreicht werden, wenn die Steuereinheit in dem speziellen Betriebszustand dazu vorgesehen ist, das erste und/oder zweite Induktionsziel periodisch mit einer ersten und/oder zweiten Periodendauer zu betreiben, welche unterteilt ist in eine Anzahl von ersten und/oder zweiten Zeitteilbereichen, welche einer Anzahl von ersten und/oder zweiten Induktionszielen entspricht. Dadurch kann insbesondere eine vom Bediener geforderte Heizleistung für Induktionsziele bereitgestellt werden. Insbesondere können dadurch Kopplungsgeräusche unterdrückt werden. Insbesondere kann eine spezielle, insbesondere aufeinander abgestimmte, Ansteuerung des ersten und/oder zweiten Induktionsziels erfolgen. Insbesondere erfolgt während der ersten und/oder zweiten Periodendauer eine Versorgung der Induktionsziele, insbesondere mit einer elektrischen Energie und/oder einer elektrischen durchschnittlichen Leistung. Unter einer "elektrischen durchschnittlichen Leistung" soll insbesondere über die Periodendauer gemittelte, insbesondere dem Induktionsziel, zugeführte elektrische Leistung verstanden werden. Vorzugsweise entspricht die elektrische durchschnittliche Leistung einer vom Bediener eingestellten Leistung. Unter einer "Periodendauer" soll insbesondere eine kürzeste Zeitspanne einer Aktivierungssequenz verstanden werden, welche sich über eine Betriebsdauer eines Garvorgangs periodisch wiederholt. Insbesondere ist das Induktionsziel während der Periodendauer aktiviert, wobei dem Induktionsziel eine elektrische Energie zuführbar ist, wobei die elektrische Energie verschwindend gering sein kann. Vorzugsweise ist das Induktionsziel in jedem Zeitteilbereich mit einer konstanten elektrischen Leistung versorgt. Unter "Zeitteilbereich" soll insbesondere eine Zeitspanne verstanden werden, deren Dauer länger als 0 s und kürzer als oder gleich der Periodendauer ist. Insbesondere ist zumindest ein Parameter, beispielsweise eine Dauer des Zeitteilbereichs und/oder ein Betriebsparameter für das Induktionsziel, beispielsweise eine Heizfrequenz und/oder eine Heizleistung, in einem betreffenden Zeitteilbereich durch die Steuereinheit einstellbar und insbesondere von Parametern weiterer Zeitteilbereiche verschieden.

Des Weiteren wird vorgeschlagen, dass die erste Periodendauer der zweiten Periodendauer entspricht. Dadurch kann eine vorteilhaft einfache Steuerung von Heizleistungen der Induktionsziele erfolgen. Insbesondere können die erste und zweite Periodendauer jeweils eine unterschiedliche Anzahl der jeweiligen Zeitteilbereiche aufweisen. Insbesondere entspricht die Anzahl der jeweiligen Zeitteilbereiche einer Anzahl der jeweiligen Induktionsziele. Die jeweilige Periodendauer weist insbesondere einen Wert zwischen 1 ms und 10 s auf.

Darüber hinaus wird vorgeschlagen, dass die Steuereinheit in dem speziellen Betriebszustand dazu vorgesehen ist, in jedem ersten Zeitteilbereich genau eines der ersten Induktionsziele und in jedem zweiten Zeitteilbereich genau eines der zweiten Induktionsziele mit einem über einer jeweiligen durchschnittlichen Leistung liegenden Leistungsüberschuss zu betreiben. Insbesondere betreibt die Steuereinheit in einem einem Zeitteilbereich zeitlich nachfolgenden Zeitteilbereichen von einem im Zeitteilbereich betriebenen Induktionsziel verschiedenes Induktionsziel mit einem Leistungsüberschuss. Insbesondere betreibt die Steuereinheit bei einem Vorliegen einer gleichen Anzahl der Induktionsziele und der Zeitteilbereiche jedes Induktionsziel nur einmal mit dem Leistungsüberschuss während einer Periodendauer. Der Leistungsüberschuss kann insbesondere durch eine geeignete Wahl von Heizfrequenzen angepasst werden. Unter einem "Leistungsüberschuss" soll insbesondere eine Leistung verstanden werden, deren Mittelwert bezogen auf ein Zeitintervall eine durchschnittliche Leistung übersteigt. Insbesondere kann der Leistungsüberschuss durch das Anlegen eines elektromagnetischen Wechselfelds mit einer von einer Zielfrequenz verschiedenen Heizfrequenz erzielt werden, wobei bei einem Betrieb des Induktionsziels mit der Zielfrequenz eine vom Bediener benötigte und/oder eingestellte Leistung bereitstellt wird. Insbesondere ist der Leistungsüberschuss bei einem Betrieb der Kochfeldvorrichtung in einem ZVS-Modus mit einer Heizfrequenz, welche kleiner ist als die Zielfrequenz, erzielbar. Insbesondere ist der Leistungsüberschuss bei einem Betrieb der Kochfeldvorrichtung in einem ZCS-Modus mit einer Heizfrequenz, welche höher ist als die Zielfrequenz, erzielbar. Unter einem "ZVS-Modus" soll insbesondere ein zero-voltageswitching-Modus verstanden werden, in welchem bei einem Schaltvorgang eines Schalters eine Spannung mit einem Wert von annähernd gleich Null vorliegt.

Weiterhin wird vorgeschlagen, dass die Steuereinheit in dem speziellen Betriebszustand dazu vorgesehen ist, das erste Induktionsziel und das zweite Induktionsziel zeitlich überschneidungsfrei anzusteuern. Hierdurch kann vorteilhaft eine insbesondere magnetische Kopplung wirksam unterdrückt werden. Ferner kann dadurch eine einfache Steuerung einer Heizleistung durchgeführt werden. Insbesondere ist in dem speziellen Betriebszustand eine Summe einer Dauer einer Ansteuerung des ersten Induktionsziels und einer Dauer einer Ansteuerung des zweiten Induktionsziels kleiner oder gleich der Periodendauer. Insbesondere weist ein erster Zeitteilbereich, in welchem das erste Induktionsziel betrieben ist, und ein zweiter Zeitteilbereich, in welchem das zweite Induktionsziel betrieben ist, einen zeitlichen Abstand, welcher größer Null ist, auf.

Falls die Summe der Dauer der Ansteuerung des ersten Induktionsziels und der Dauer der Ansteuerung des zweiten Induktionsziels größer als die Periodendauer ist, kann die Steuereinheit alternativ die ersten und zweiten Induktionsziele zusammenfassen und die Induktionsziele gemeinsam während einer gemeinsamen Periodendauer betreiben. Die gemeinsame Periodendauer weist eine Anzahl der gemeinsamen Zeitteilbereiche auf, welche einer Anzahl der betriebenen ersten und zweiten Induktionsziele entspricht. Insbesondere betreibt die Steuereinheit bei einem Vorliegen einer gleichen Anzahl der Induktionsziele und der Zeitteilbereiche während der gemeinsamen Periodendauer jedes Induktionsziel nur einmal mit einem Leistungsüberschuss.

Zudem wird ein Gargerät, insbesondere ein Kochfeld, vorgeschlagen mit zumindest einer erfindungsgemäßen Gargerätevorrichtung, wodurch insbesondere eine störgeräuscharme Benutzung durch einen Bediener erfolgen kann.

Darüber hinaus wird ein Verfahren zum Betrieb einer erfindungsgemäßen Gargerätevorrichtung, insbesondere einer Kochfeldvorrichtung, vorgeschlagen, bei welchem zumindest ein erstes induktionsziel aus einer ersten Energiequelle und zumindest ein zweites Induktionsziel aus einer zweiten Energiequelle versorgt werden, eine Kopplungskenngröße einer Kopplung zwischen den Induktionszielen bestimmt wird, die Kopplungskenngröße ausgewertet wird und im Falle eines Vorhandenseins einer Kopplung zwischen dem ersten Induktionsziel und dem zweiten Induktionsziel in zumindest einen speziellen Betriebszustand übergegangen wird, um Kopplungsgeräusche wenigstens zu reduzieren durch zumindest eine spezielle, insbesondere periodische, Ansteuerung der Induktionsziele, wobei eine Position von Gargeschirren der Induktionsziele erfasst wird.

Dadurch kann eine vorteilhafte Ansteuerung, insbesondere ein geräuscharmer Betrieb, realisiert werden. Insbesondere kann eine einfache Leistungskontrolle ermöglicht werden. Zudem können akustische Störsignale aufgrund einer insbesondere magnetischen Kopplung reduziert werden. Hierdurch kann insbesondere eine unvorteilhafte akustische Belastung eines Bedieners vermieden werden, wodurch insbesondere ein hoher Bedienkomfort sowie insbesondere ein positiver Eindruck bei dem Bediener insbesondere hinsichtlich einer akustischen Qualität erreicht werden kann. Aufgrund einer konstanten Gesamtleistung kann insbesondere eine vorteilhafte Belastung eines Versorgungsstromnetzes erfolgen. Vorzugsweise kann Flicker, insbesondere nach der DIN EN 61000-3-3-Norm, durch eine vorteilhafte Steuerung von einzelnen Induktionszielen vermieden werden. Ferner können akustische Störgeräusche aufgrund von Intermodulationen zwischen mit unterschiedlichen Frequenzen betriebenen Induktionszielen vermieden werden. Zudem kann eine flexible und einfache Einstellung einer von einem Induktor erzeugte Heizleistung erreicht werden. Insbesondere kann eine zuverlässige Ausgestaltung vorzugsweise in Bezug auf eine durch einen Bediener angeforderte Sollheizleistung erzielt werden. Insbesondere können mehrere Induktionsziele vorteilhaft geräuscharm und mit einer schwankungsarmen Belastung eines Versorgungsnetzes gemeinsam gleichzeitig betrieben werden.

Es zeigen:
- Fig. 1a: ein Kochfeld mit einer Gargerätevorrichtung mit einer ersten Induktionszielanordnung mit zwei Induktionszielen in einer schematischen Draufsicht,
- Fig. 1b: ein beispielhaftes Diagramm einer Aktivierungssequenz der zwei Induktionsziele der ersten Induktionszielanordnung,
- Fig. 2a: die Gargerätevorrichtung mit einer zweiten Induktionszielanordnung mit drei Induktionszielen in einer schematischen Draufsicht,
- Fig. 2b: ein beispielhaftes Diagramm einer Aktivierungssequenz der drei Induktionsziele der zweiten Induktionszielanordnung,
- Fig. 3a: die Gargerätevorrichtung mit einer dritten Induktionszielanordnung mit vier Induktionszielen in einer schematischen Draufsicht,
- Fig. 3b: ein beispielhaftes Diagramm einer Aktivierungssequenz der vier Induktionsziele der dritten Induktionszielanordnung,
- Fig. 3c: ein beispielhaftes Diagramm einer weiteren Aktivierungssequenz der dritten Induktionszielanordnung mit vier Induktionszielen,
- Fig. 4a: die Gargerätevorrichtung mit einer vierten Induktionszielanordnung mit fünf Induktionszielen in einer schematischen Draufsicht,
- Fig. 4b: ein beispielhaftes Diagramm einer Aktivierungssequenz der fünf Induktionsziele der vierten Induktionszielanordnung,
- Fig. 5a: die Gargerätevorrichtung mit einer fünften Induktionszielanordnung mit sechs Induktionszielen in einer schematischen Draufsicht,
- Fig. 5b: ein beispielhaftes Diagramm einer Aktivierungssequenz der sechs Induktionsziele der fünften Induktionszielanordnung,
- Fig. 6a: ein weiteres Kochfeld mit einer Gargerätevorrichtung mit einer sechsten Induktionszielanordnung mit fünf Induktionszielen in einer schematischen Draufsicht,
- Fig. 6b: ein beispielhaftes Diagramm einer Aktivierungssequenz der fünf Induktionsziele der sechsten Induktionszielanordnung,
- Fig. 7a: ein weiteres Kochfeld mit einer Gargerätevorrichtung mit einer siebten Induktionszielanordnung mit vier Induktionszielen in einer schematischen Draufsicht und
- Fig. 7b: ein beispielhaftes Diagramm einer Aktivierungssequenz der vier Induktionsziele der siebten Induktionszielanordnung.

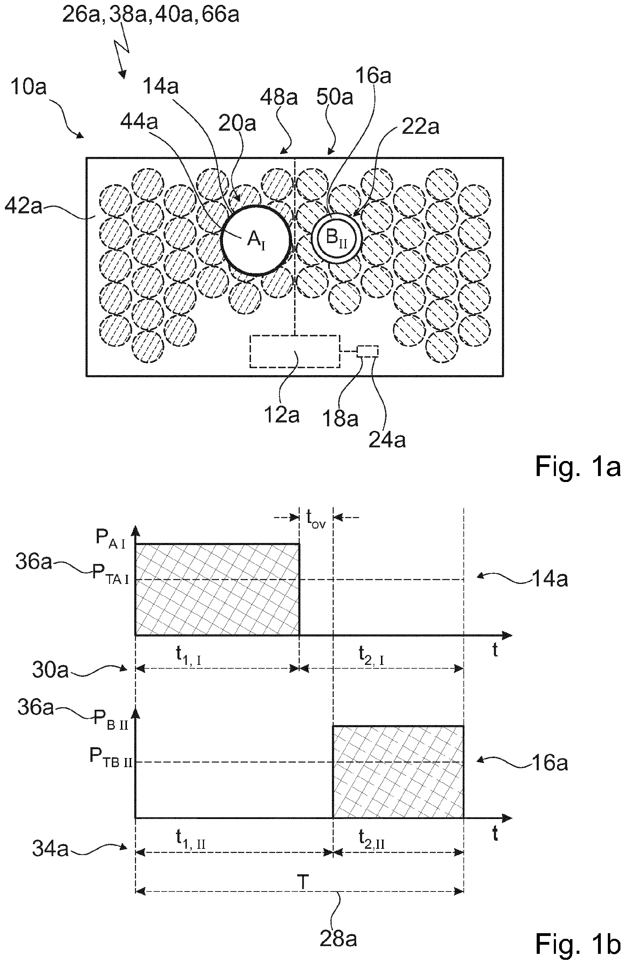

Fig. 1 zeigt ein als Kochfeld 38a ausgebildetes Gargerät 26a. Das Gargerät 26a ist als Induktionskochfeld 40a ausgebildet. Das Gargerät 26a ist als Matrixkochfeld 66a ausgebildet. Das Gargerät 26a weist eine Gargerätevorrichtung 10a auf. Die Gargerätevorrichtung 10a ist als eine Induktionskochfeldvorrichtung ausgebildet.

Die Gargerätevorrichtung 10a weist eine Aufstellplatte 42a für zumindest ein Gargeschirr 44a auf. Im vorliegenden Ausführungsbeispiel ist die Aufstellplatte 42a als eine Kochfeldplatte ausgebildet. Die Aufstellplatte 42a ist zu einem Aufstellen von Gargeschirr 44a vorgesehen. Die Aufstellplatte 42a weist einen ersten Aufstellbereich 48a auf. Die Aufstellplatte 42a weist einen zweiten Aufstellbereich 50a auf.

Die Gargerätevorrichtung 10a weist eine Vielzahl an Induktoren 20a, 22a auf. Die Induktoren 20a, 22a sind matrixartig angeordnet. Die Induktoren 20a, 22a sind in einem eingebauten Zustand unterhalb der Aufstellplatte 42a angeordnet. Die Induktoren 20a, 22a sind jeweils dazu vorgesehen, auf der Aufstellplatte 42a über den Induktoren 20a, 22a aufgestellte Gargeschirre 44a zu beheizen. Jeder Induktor 20a, 22a weist zumindest eine Induktionsspule auf.

Die Gargerätevorrichtung 10a weist eine Steuereinheit 12a auf. Die Steuereinheit 12a ist dazu vorgesehen, in Abhängigkeit von durch einen Bediener eingegebenen Betriebsparametern, wie beispielsweise einer Sollheizleistung und/oder einer Gardauer, Aktionen und/oder Algorithmen auszuführen und/oder Einstellungen zu verändern.

Basierend auf den auf der Aufstellplatte 42a aufgestellten Gargeschirren 44a definiert die Steuereinheit 12a Induktionsziele 14a, 16a. Im vorliegenden Beispiel ist ein erstes Induktionsziel 14a durch die Steuereinheit 12a basierend auf dem auf dem ersten Aufstellbereich 48a aufgestellten ersten Gargeschirr 44a und von den ersten Induktoren 20a, über welche das erste Gargeschirr 44a platziert ist, definiert. Das erste Induktionsziel 14a weist von der Steuereinheit 12a bestimmte Induktoren 20a auf. Im vorliegenden Beispiel iist ein zweites Induktionsziel 16a ist durch die Steuereinheit 12a basierend auf dem auf dem zweiten Aufstellbereich 50a aufgestellten zweiten Gargeschirr 44a und von den zweiten Induktoren 22a, über welche das zweite Gargeschirr 44a platziert ist, definiert. Das zweite Induktionsziel 16a weist von der Steuereinheit 12a bestimmte Induktoren 22a auf. Ein Induktionsziel 14a, 16a kann einen oder mehrere Induktoren 20a, 22a aufweisen. Die Steuereinheit 12a kann eine Vielzahl an Induktionszielen 14a, 16a definieren.

Durch Aufstellen des ersten Gargeschirrs 44a auf dem ersten Aufstellbereich 48a ist das erste Induktionsziel 14a dem ersten Aufstellbereich 48a zugeordnet. Das erste Induktionsziel 14a ist dem ersten Aufstellbereich 48a zugeordnet. Alle dem ersten Aufstellbereich 48a zugeordneten Induktionsziele 14a sind aus einer ersten Energiequelle mit einer elektrischen Energie versorgbar. Die erste Energiequelle ist dem ersten Aufstellbereich 48a zugeordnet.

Durch Aufstellen des zweiten Gargeschirrs 44a auf dem zweiten Aufstellbereich 50a ist das zweite Induktionsziel 16a dem zweiten Aufstellbereich 50a zugeordnet. Das zweite Induktionsziel 16a ist dem zweiten Aufstellbereich 50a zugeordnet. Alle dem zweiten Aufstellbereich 50a zugeordneten Induktionsziele 16a sind aus einer zweiten Energiequelle mit einer elektrischen Energie versorgbar. Die zweite Energiequelle ist dem zweiten Aufstellbereich 50a zugeordnet.

Die erste Energiequelle versorgt das erste Induktionsziel 14a mit einer elektrischen Energie. Die zweite Energiequelle versorgt das zweite Induktionsziel 16a mit einer elektrischen Energie. Die erste Energiequelle ist eine erste elektrische Stromphase eines Stromversorgungsnetzes. Die zweite Energiequelle ist entweder die gleiche erste elektrische Stromphase eines Stromversorgungsnetzes oder eine zweite elektrische Stromphase eines Stromversorgungsnetzes. Die Gargerätevorrichtung 10a kann zumindest einen Wechselrichter zur Bereitstellung zumindest einer Heizfrequenz für das jeweilige Induktionsziel 14a, 16a aufweisen.

Alternativ kann die Gargerätevorrichtung 10a eine erste Wechselrichtereinheit aufweisen, welche Teil der ersten Energiequelle sein kann. Alternativ kann die Gargerätevorrichtung 10a eine zweite Wechselrichtereinheit aufweisen, welche Teil der zweiten Energiequelle sein kann. Alternativ kann die erste und/oder zweite Wechselrichtereinheit jeweils zumindest einen Wechselrichter zur Bereitstellung zumindest einer jeweiligen Heizfrequenz für das jeweilige Induktionsziel 14a, 16a aufweisen.

Die Induktionsziele 14a, 16a sind jeweils zu einer Beheizung von Gargeschirren 44a vorgesehen.

Die Steuereinheit 12a ist zu einer Ansteuerung und Energieversorgung des ersten Induktionsziels 14a aus der ersten Energiequelle und des zweiten Induktionsziels 16a aus der zweiten Energiequelle vorgesehen. Die Steuereinheit 12a ist zur periodischen Versorgung der Induktionsziele 14a, 16a vorgesehen. Die Steuereinheit 12a betreibt die Induktionsziele 14a, 16a jeweils über eine gesamte Gardauer periodisch. Die Gardauer ist jeweils in Periodendauern 28a aufgeteilt (vgl. Fig. 1b). Während einer jeweiligen Periodendauer 28a versorgt die Steuereinheit 12a die Induktionsziele 14a, 16a mit einer jeweiligen durchschnittlichen Leistung 36a. Angenommen, das erste Induktionsziel 14a und das zweite Induktionsziel 16a sind vorliegend miteinander magnetisch gekoppelt.

Das erste Induktionsziel 14a weist vier erste Induktoren 20a auf. Von mehrfach vorhandenen Objekten ist in den Figuren jeweils lediglich eines mit einem Bezugszeichen versehen. Das zweite Induktionsziel 16a weist einen zweiten Induktor 22a auf. Ein Induktionsziel kann wenigstens einen und beliebig viele Induktoren umfassen. Im vorliegenden Ausführungsbeispiel weist die Gargerätevorrichtung 10a achtundzwanzig erste und achtundzwanzig zweite Induktoren 20a, 22a auf.

Eine momentane Heizleistung eines jeden Induktionsziels ist maßgeblich von der am Induktionsziel angelegten Heizfrequenz abhängig. In einem ZVS-Modus steigt die Heizleistung eines Induktionsziels mit abnehmender Heizfrequenz. In einem ZCS-Modus sinkt die Heizleistung eines Induktionsziels mit abnehmender Heizfrequenz. Bevorzugt ist die Gargerätevorrichtung 10a im ZVS-Modus betrieben.

Die Gargerätevorrichtung 10a weist eine Erfassungseinheit 18a auf. Die Erfassungseinheit 18a ist zur Bestimmung einer Kopplungskenngröße einer Kopplung zwischen den Induktionszielen 14a, 16a vorgesehen. Einer oder mehrere der ersten Induktoren 20a des ersten Induktionsziels 14a sind Teil der Erfassungseinheit 18a. Die Erfassungseinheit 18a ist dazu vorgesehen, ein von dem zweiten Induktor 22a des zweiten Induktionsziels 16a in einen der ersten Induktoren 20a des ersten Induktionsziels 14a eingekoppeltes Signal als Kopplungskenngröße der Steuereinheit 12a bereitzustellen. Alternativ oder zusätzlich kann der zweite Induktor 22a des zweiten Induktionsziels 16a Teil der Erfassungseinheit 18a sein. Die Erfassungseinheit 18a kann dazu vorgesehen sein, ein von dem ersten Induktor 20a des ersten Induktionsziels 14a in den zweiten Induktor 22a des zweiten Induktionsziels 16a eingekoppeltes Signal als Kopplungskenngröße bereitzustellen. Die Erfassungseinheit 18a kann beispielsweise einen Magnetfeldsensor aufweisen. Die Kopplungskenngröße umfasst eine Magnetfeldkenngröße.

Alternativ kann eine Positionserfassungseinheit 24a der Gargerätevorrichtung 10a die Kopplungskenngröße erfassen. Die Kopplungskenngröße umfasst eine erste Position des ersten Induktionsziels 14a. Die Kopplungskenngröße umfasst eine zweite Position des zweiten Induktionsziels 16a. Die Positionserfassungseinheit 24a ist zur Erfassung der jeweiligen Position der Induktionsziele 14a, 16a, insbesondere der zugehörigen Gargeschirre 44a, vorgesehen. Die Positionserfassungseinheit 24a kann als Kamera ausgebildet sein. Alternativ oder zusätzlich kann die Positionserfassungseinheit 24a die Induktoren 20a, 22a umfassen und in bekannter Weise die Position von Gargeschirren 44a oberhalb der Induktoren 20a, 22a erfassen. Die Positionserfassungseinheit 24a kann Teil der Erfassungseinheit 18a sein.

Die durchschnittliche Leistung 36a entspricht unter Berücksichtigung einer Flicker-Norm einem durch den Bediener eingegebenen Wert einer gewünschten Sollheizleistung.

Die Steuereinheit 12a wertet die Kopplungskenngröße aus. Die Steuereinheit 12a prüft ein Vorhandensein einer Kopplung zwischen dem ersten Induktionsziel 14a und dem zweiten Induktionsziel 16a.

Im Falle einer Abwesenheit der Kopplung leitet die Steuereinheit 12a einen normalen Betriebszustand ein. In dem normalen Betriebszustand steuert die Steuereinheit 12a die Induktionsziele 14a, 16a unabhängig voneinander an. In dem normalen Betriebszustand kann die Steuereinheit 12a die Induktionsziele 14a, 16a gleichzeitig ansteuern. In dem normalen Betriebszustand kann die Steuereinheit 12a die Induktionsziele 14a, 16a mit einer eigenen Heizfrequenz ansteuern.

Im Falle des Vorhandenseins der Kopplung leitet die Steuereinheit 12a einen speziellen Betriebszustand ein, um Kopplungsgeräusche zu reduzieren durch zumindest eine spezielle Ansteuerung der Induktionsziele 14a, 16b. Der spezielle Betriebszustand mit der speziellen Ansteuerung wird im Folgenden anhand Fig. 1b beschrieben.

Die Steuereinheit 12a ist dazu vorgesehen, im speziellen Betriebszustand ein Verfahren durchzuführen, bei welchem die Kopplungskenngröße der Kopplung zwischen den Induktionszielen 14a, 16a bestimmt, die Kopplungskenngröße ausgewertet und im Falle des Vorhandenseins der Kopplung zwischen dem ersten Induktionsziel 14a und dem zweiten Induktionsziel 16a in den speziellen Betriebszustand übergegangen wird, um Kopplungsgeräusche zu reduzieren durch eine spezielle Ansteuerung der Induktionsziele 14a, 16a.

Fig. 1b zeigt ein beispielhaftes Diagramm einer Aktivierungssequenz der zwei koppelnden Induktionsziele 14a, 16a einer ersten Induktionszielanordnung, in welchem für jedes Induktionsziel 14a, 16a eine Heizleistung über einer Zeit aufgetragen ist.

In einem speziellen Betriebszustand betreibt die Steuereinheit 12a die ersten und die zweiten Induktionsziele 14a, 16a unter Vermeidung von Flicker (vgl. Fig. 1b). Zur Vermeidung von Flicker hält die Steuereinheit 12a in dem speziellen Betriebszustand die Gesamtausgangsleistung von den Induktionszielen 14a, 16a zumindest in einem Großteil einer Periodendauer 28a im Wesentlichen konstant.

Die Steuereinheit 12a betreibt in dem speziellen Betriebszustand die ersten Induktionsziele 14a und die zweiten Induktionszielen 16a unter Vermeidung von Kopplungsgeräuschen.

In dem speziellen Betriebszustand reduziert die Steuereinheit 12a Kopplungsgeräusche durch eine spezielle Ansteuerung der koppelnden Induktionsziele 14a, 16a.

In dem speziellen Betriebszustand betreibt die Steuereinheit 12a das erste Induktionsziel 14a periodisch mit einer ersten Periodendauer 28a. Die erste Periodendauer 28a ist in erste Zeitteilbereiche 30a unterteilt.

In dem speziellen Betriebszustand betreibt die Steuereinheit 12a das zweite Induktionsziel 16a periodisch mit einer zweiten Periodendauer 28a. Die zweite Periodendauer 28a ist in zweite Zeitteilbereiche 34a unterteilt.

Die erste Periodendauer 28a ist gleich der zweiten Periodendauer 28a, weshalb im Folgenden nur noch von "der Periodendauer 28a" gesprochen wird.

Die Periodendauer 28a ist jeweils in zwei erste, und zwei zweite Zeitteilbereiche 30a, 34a aufgeteilt, wobei die ersten Zeitteilbereiche 30a dem ersten Induktionsziel 14a und die zweiten Zeitteilbereiche 34a dem zweiten Induktionsziel 16a zugeordnet sind.

Falls eine Anzahl von ersten und/oder zweiten Induktionszielen 14a, 16a gleich eins ist, ist eine Anzahl von ersten und/oder zweiten Zeitteilbereichen 30a, 34a gleich zwei. Falls eine Anzahl von ersten und/oder zweiten Induktionszielen 14a, 16a größer oder gleich zwei ist, entspricht die Anzahl von ersten und/oder zweiten Zeitteilbereichen 30a, 34a der Anzahl von ersten Induktionszielen 14a und/oder zweiten Induktionszielen 16a.

Die Steuereinheit 12a steuert in dem speziellen Betriebszustand das erste Induktionsziel 14a und das zweite Induktionsziel 16a zur Vermeidung von Kopplungsgeräuschen zeitlich überschneidungsfrei an. Zwischen dem ersten ersten Zeitteilbereichen 30a t₁, _{I} und dem zweiten zweiten Zeitteilbereichen 34a t_{2, II} besteht ein überlappungsfreies Zeitintervall tov, in dem das erste und das zweite Induktionsziel 14a, 16a leistungslos und/oder deaktiviert und/oder mit einer verschwindend geringen Leistung angesteuert sind.

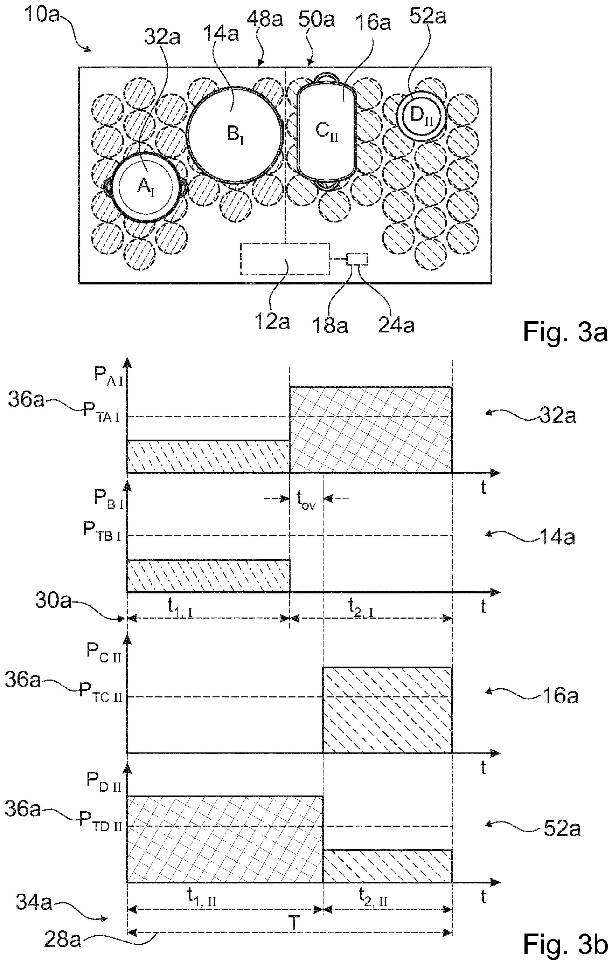

Zusätzlich kann die Steuereinheit 12a zur Vermeidung von Kopplungsgeräuschen in dem speziellen Betriebszustand aus einem Katalog an Ansteuerungsmöglichkeiten eine Ansteuerungsmöglichkeit auswählen. Beispielsweise könnte die Steuereinheit 12a in dem speziellen Betriebszustand zu der Vermeidung von Kopplungsgeräuschen die ersten Induktionsziele 14a und/oder die zweiten Induktionsziele 16a wenigstens im Wesentlichen mit einer im Wesentlichen gleichen Heizfrequenz betreiben. Dies ist in den Figuren, insbesondere in Fig. 3b, 4b, 5b und 6b, durch eine strichpunktierte Schraffur gekennzeichnet.

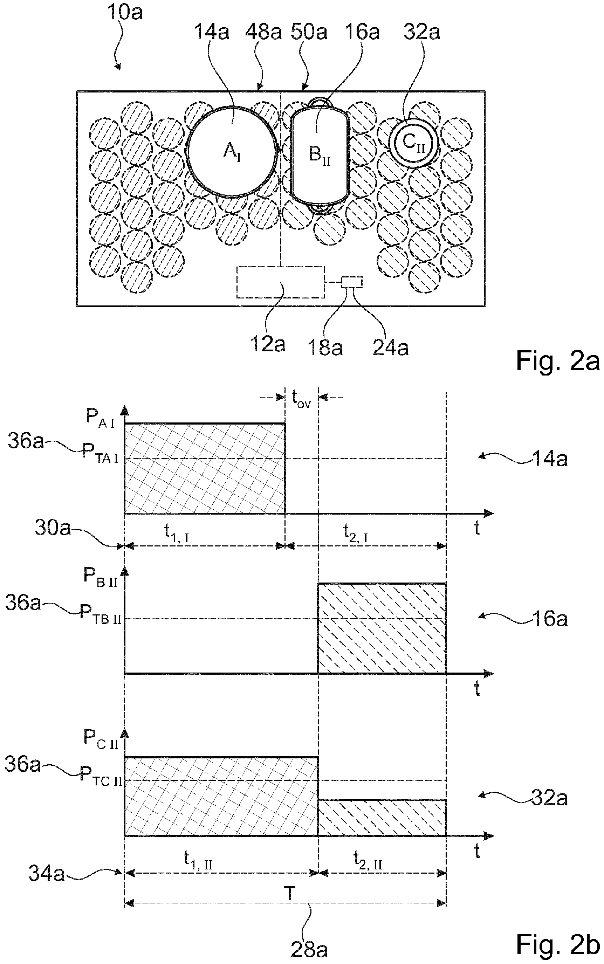

Alternativ oder zusätzlich könnte die Steuereinheit 12a in dem speziellen Betriebszustand zu der Vermeidung von Kopplungsgeräuschen die ersten Induktionsziele 14a und/oder die zweiten Induktionsziele 16a mit Frequenzen betreiben, welche sich um mindestens 17 kHz unterscheiden. Dies ist in den Figuren, insbesondere in Fig. 2b, 3b, 4b, 5b, 6b und 7b, durch eine gestrichelte Schraffur gekennzeichnet.

Beispielsweise könnte die Steuereinheit 12a alternativ oder zusätzlich in dem speziellen Betriebszustand zu der Vermeidung von Kopplungsgeräuschen zumindest einen Teil der ersten Induktionsziele 14a und/oder der zweiten Induktionsziele 16a deaktivieren und zumindest einen Teil der ersten Induktionsziele 14a und/oder der zweiten Induktionsziele 16a mit einer bestimmten Frequenz betreiben. Dies ist in den Figuren, insbesondere in Fig. 1b, 2b, 3b, 4b, 5b, 6b und 7b durch eine karierte Schraffur gekennzeichnet.

Im Fall der in Fig. 1a dargestellten ersten Induktionszielanordnung betreibt die Steuereinheit 12a in einem ersten ersten Zeitteilbereich 30a t_{1, I} der Periodendauer 28a das erste Induktionsziel 14a aus der ersten Energiequelle mit einer geeigneten Frequenz, an welcher das erste Induktionsziel 14a einen Leistungsüberschuss liefert (vgl. Fig. 1b). In einem zweiten ersten Zeitteilbereich 30a t_{2, I} ist das erste Induktionsziel 14a deaktiviert. Über die Periodendauer 28a gemittelt, liefert das erste Induktionsziel 14a eine durchschnittliche Leistung 36a P_{TA I}.

Die Steuereinheit 12a deaktiviert in einem ersten zweiten Zeitteilbereich 34a t_{1,II} der Periodendauer 28a das zweite Induktionsziel 16a. Die Steuereinheit 12a betreibt in einem zweiten zweiten Zeitteilbereich 34a t_{2,II} das zweite Induktionsziel 16a aus der zweiten Energiequelle mit einer geeigneten Frequenz, an welcher das zweite Induktionsziel 16a einen Leistungsüberschuss liefert. Über die Periodendauer 28a gemittelt, liefert das zweite Induktionsziel 16a eine durchschnittliche Leistung 36a P_{TB II}.

Eine Summe des ersten ersten Zeitteilbereichs 30a t_{1, I} und des zweiten ersten Zeitteilbereichs 30a t_{2, I} entspricht der Periodendauer 28a. Eine Summe des ersten zweiten Zeitteilbereichs 34a t_{1, II} und des zweiten zweiten Zeitteilbereichs 34a t_{2, II} entspricht der Periodendauer 28a. Der erste erste Zeitteilbereich 30a t_{1, I} und der zweite zweite Zeitteilbereich 34a t_{2, II} sind während der Periodendauer 28a zeitlich überschneidungsfrei angeordnet. Der erste erste Zeitteilbereich 30a t_{1, I} und der zweite zweite Zeitteilbereich 34a t_{2, II} weisen einen Zeitabstand t_{OV} voneinander. Eine Summe des ersten ersten Zeitteilbereichs 30a t_{1, I} und des zweiten zweiten Zeitteilbereichs 34a t_{2, II} ist kleiner als die Periodendauer 28a.

In Fig. 2 bis 6 ist jeweils eine von der ersten Induktionszielanordnung verschiedene beispielhafte Induktionszielanordnung gezeigt. Die nachfolgenden Beschreibungen beschränken sich im Wesentlichen auf die Unterschiede zwischen den Induktionszielanordnungen, wobei bezüglich gleich bleibender Bauteile, Merkmale und Funktionen auf die Beschreibung der ersten Induktionszielanordnung der Fig. 1 verwiesen werden kann.

Fig. 2a zeigt die Gargerätevorrichtung 10a mit einer beispielhaften zweiten Induktionszielanordnung mit drei Induktionszielen 14a, 16a, 32a. Ein erstes Induktionsziel 14a ist dem ersten Aufstellbereich 48a zugeordnet. Ein zweites und weiteres zweites Induktionsziel 16a, 32a sind dem zweiten Aufstellbereich 50a zugeordnet. Das erste Induktionsziel 14a ist aus der ersten Energiequelle mit elektrischer Energie versorgt. Das zweite und weitere zweite Induktionsziel 16a, 32a sind aus der zweiten Energiequelle mit elektrischer Energie versorgt.

Die Periodendauer 28a ist jeweils in zwei erste, und zwei zweite Zeitteilbereiche 30a, 34a aufgeteilt, wobei die ersten Zeitteilbereiche 30a dem ersten Induktionsziel 14a und die zweiten Zeitteilbereiche 34a dem zweiten und weiteren zweiten Induktionsziel 16a, 32a zugeordnet sind.

Im vorliegenden Fall wird angenommen, dass das erste und zweite Induktionsziel 14a, 16a miteinander magnetisch gekoppelt sind. Ferner ist angenommen, dass das weitere zweite Induktionsziel 32a magnetisch kopplungsfrei zu dem ersten und zweiten Induktionsziel 14a, 16a angeordnet ist.

Fig. 2b zeigt ein beispielhaftes Diagramm einer Aktivierungssequenz der drei Induktionsziele 14a, 16a, 32a der zweiten Induktionszielanordnung.

Der erste erste Zeitteilbereich 30a t_{1, I} und der zweite zweite Zeitteilbereich 34a t_{2, II} sind während der Periodendauer 28a zeitlich überschneidungsfrei angeordnet. Die Steuereinheit 12a betreibt in einem ersten ersten Zeitteilbereich 30a t_{1, I} das erste Induktionsziel 14a, während das zweite Induktionsziel 16a deaktiviert ist.

Die Steuereinheit 12a betreibt in einem zweiten zweiten Zeitteilbereich 34a t_{2, II} das zweite und das weitere zweite Induktionsziel 16a, 32a mit Frequenzen, welche sich um mindestens 17 kHz unterscheiden, wobei das erste Induktionsziel 14a deaktiviert ist (vgl. Fig. 2b). Fig. 3a zeigt die Gargerätevorrichtung mit einer beispielhaften dritten Induktionszielanordnung mit vier Induktionszielen 14a, 16a, 32a, 52a. Ein erstes und ein weiteres erstes Induktionsziel 14a, 32a sind dem ersten Aufstellbereich 48a zugeordnet. Ein zweites und ein weiteres zweites Induktionsziel 16a, 52a sind dem zweiten Aufstellbereich 50a zugeordnet.

Fig. 3b zeigt ein beispielhaftes Diagramm einer Aktivierungssequenz der vier Induktionsziele 14a, 16a, 32a, 52a der dritten Induktionszielanordnung.

Die Periodendauer 28a ist jeweils in zwei erste, und zwei zweite Zeitteilbereiche 30a, 34a aufgeteilt, wobei die ersten Zeitteilbereiche 30a dem ersten und weiteren ersten Induktionsziel 14a, 32a und die zweiten Zeitteilbereiche 34a dem zweiten und weiteren zweiten Induktionsziel 16a, 52a zugeordnet sind.

Angenommen, dass das erste und zweite Induktionsziel 14a, 16a sind miteinander magnetisch gekoppelt. Die Steuereinheit 12a betreibt das erste Induktionsziel 14a in einem ersten ersten Zeitteilbereich 30a t_{1, I}. Die Steuereinheit 12a betreibt das zweite Induktionsziel 16a in einem zweiten zweiten Zeitteilbereich 34a t_{2, II}. Der erste erste Zeitteilbereich 30a t_{1, I} und der zweite zweite Zeitteilbereich 34a t_{2 II} sind während der Periodendauer 28a zeitlich überschneidungsfrei angeordnet (vgl. Fig. 3b).

Die Steuereinheit 12a betreibt die dem ersten Aufstellbereich 48a zugeordneten Induktionsziele 14a, 32a in einem ersten ersten Zeitteilbereich 30a t_{1, I} mit einer gleichen Frequenz. In einem zweiten ersten Zeitteilbereich 34a t_{2, I} betreibt die Steuereinheit 12a das weitere erste Induktionsziel 32a und deaktiviert das erste Induktionsziel 14a.

Die Steuereinheit 12a betreibt von den dem zweiten Aufstellbereich 50a zugeordneten Induktionszielen 16a, 52a in einem ersten zweiten Zeitteilbereich 34a t_{1, II} das weitere zweite Induktionsziel 52a und deaktiviert das zweite Induktionsziel 16a. In einem zweiten zweiten Zeitteilbereich 34a t_{2, II} betreibt die Steuereinheit 12a das zweite und weitere zweite Induktionsziel 16a, 52a mit Frequenzen, welche sich um mindestens 17 kHz unterscheiden.

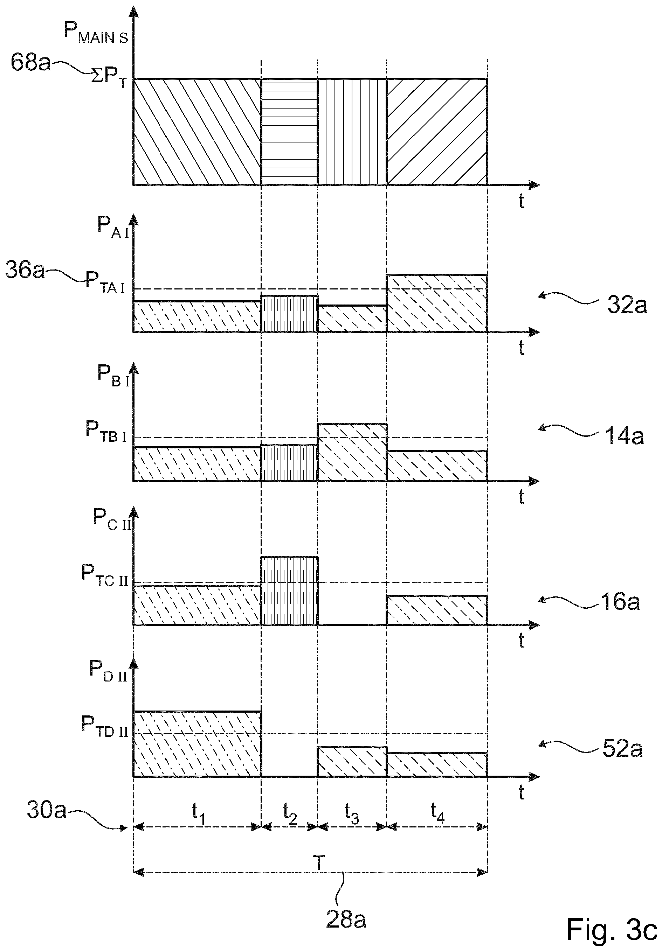

Fig. 3c zeigt ein beispielhaftes Diagramm einer weiteren Aktivierungssequenz der dritten Induktionszielanordnung mit vier Induktionszielen 14a, 16a, 32a, 52a.

In einem möglichen Fall, dass die Steuereinheit 12a die zwei magnetisch koppelnde Induktionsziele 14a, 16a, welche aus unterschiedlichen Energiequellen mit der elektrischen Energie versorgt sind, zeitlich nicht überlappungsfrei betreiben kann, beispielsweise aufgrund einer bestimmten Leistungswahl durch einen Bediener, leitet die Steuereinheit 12a einen weiteren Betriebszustand ein. Im weiteren Betriebszustand fasst die Steuereinheit 12a die vier Induktionsziele 14a, 16a, 32a, 52a zu einer Gruppe zusammen und erstellt eine Aktivierungssequenz mit einer Periodendauer 28a mit vier ersten Zeitteilbereichen 30a t₁, t₂, t₃, t₄.

In dem ersten ersten Zeitteilbereich 30a t₁ betreibt die Steuereinheit 12a alle Induktionsziele 14a, 16a, 32a, 52a mit einer gemeinsamen Frequenz.

In dem zweiten ersten Zeitteilbereich 30a t₂ betreibt die Steuereinheit 12a das weitere erste, erste und zweite Induktionsziel 32a, 14a, 16a, mit einer weiteren gemeinsamen Frequenz und deaktiviert das weitere zweite Induktionsziel 52a.

In dem dritten ersten Zeitteilbereich 30a t₃ betreibt die Steuereinheit 12a das weitere erste, zweite und weitere zweite Induktionsziel 32a, 16a, 52a mit einer gleichen Frequenz. In dem dritten ersten Zeitteilbereich 30a t₃ betreibt die Steuereinheit 12a das erste Induktionsziel 14a mit einer Frequenz, die sich von der Frequenz um mindestens 17 kHz unterscheidet, an welcher das weitere erste und weitere zweite Induktionsziel 32a, 52a im Zeitteilbereich 30a t₃ betrieben sind.

In dem vierten ersten Zeitteilbereich 30a t₄ betreibt die Steuereinheit 12a das weitere erste und erste Induktionsziel 32a, 14a mit einer gleichen Frequenz und das zweite und weitere zweite Induktionsziel 16a, 52a mit einer weiteren gleichen Frequenz, wobei die gleiche Frequenz sich von der weiteren gleichen Frequenz um mindestens 17 kHz unterscheidet. Ein Vergleich der Aktivierungssequenz in Fig. 3b mit der weiteren Aktivierungssequenz in Fig. 3c zeigt eine aufwendigere Ansteuerung der Induktionsziele 14a, 16a, 32a, 52a durch die Steuereinheit 12a.

Die Steuereinheit 12a steuert eine Gesamtausgangsleistung 68a, sodass sie in jedem Zeitteilbereich 30a t₁, t₂, t₃, t₄ über die gesamte Periodendauer 28a konstant ist.

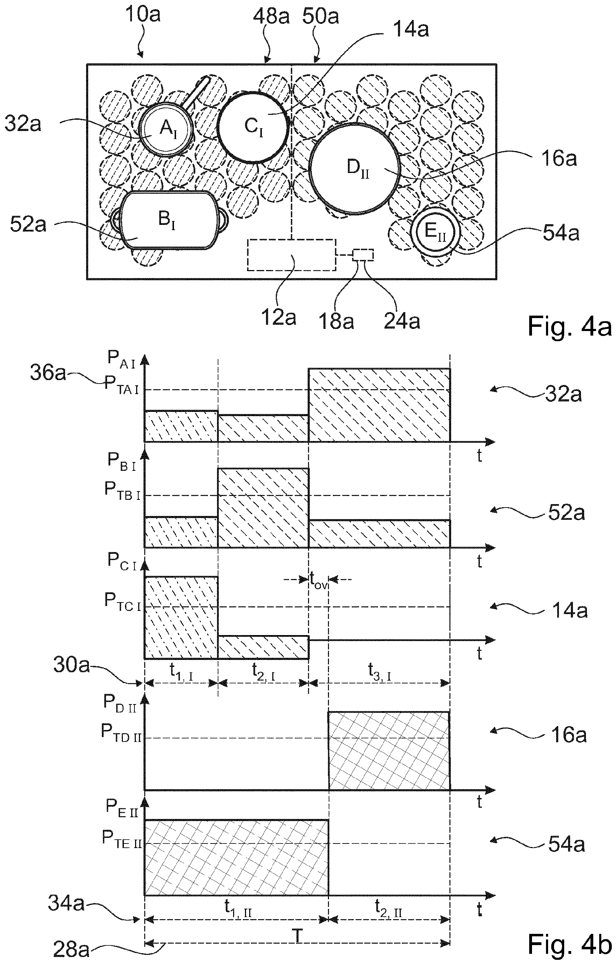

Fig. 4a zeigt die Gargerätevorrichtung mit einer beispielhaften vierten Induktionszielanordnung mit fünf Induktionszielen 14a, 16a, 32a, 52a, 54a. Ein erstes Induktionsziel 14a und zwei weitere erste, Induktionsziele 32a, 52a sind dem ersten Aufstellbereich 48a zugeordnet. Ein zweites und weiteres zweites Induktionsziel 16a, 54a sind dem zweiten Aufstellbereich 50a zugeordnet.

Fig. 4b zeigt ein beispielhaftes Diagramm einer Aktivierungssequenz der fünf Induktionsziele 14a, 16a, 32a, 52a, 54a der vierten Induktionszielanordnung.

Die Periodendauer 28a ist jeweils in drei erste, und zwei zweite Zeitteilbereiche 30a, 34a aufgeteilt, wobei die ersten Zeitteilbereiche 30a dem ersten Induktionsziel 14a und zwei weiteren ersten Induktionszielen 32a, 52a und die zweiten Zeitteilbereiche 34a dem zweiten und weiteren zweiten Induktionsziel 16a, 54a zugeordnet sind.

Angenommen, dass das erste und zweite Induktionsziel 14a, 16a sind miteinander magnetisch gekoppelt. Die Steuereinheit 12a betreibt das erste Induktionsziel 14a in einem ersten ersten und zweiten ersten Zeitteilbereich 30a t_{1, I}, t_{2, I} (vgl. Fig. 4b). Die Steuereinheit 12a betreibt das zweite Induktionsziel 16a in einem zweiten zweiten Zeitteilbereich 34a t_{2, II}. Der erste erste und zweite erste Zeitteilbereich 30a t_{1, I}, t_{2, I} und der zweite zweite Zeitteilbereich 34a t_{2, II} sind während der Periodendauer 28a zeitlich überschneidungsfrei angeordnet (vgl. Fig. 4b).

Die Steuereinheit 12a betreibt die dem ersten Aufstellbereich 48a zugeordneten Induktionsziele 14a, 32a, 52a in einem ersten ersten Zeitteilbereich 30a t_{1, I} mit einer gleichen Frequenz. In einem zweiten ersten Zeitteilbereich 30a t_{2, I} betreibt die Steuereinheit 12a das erste und weitere erste Induktionsziel 14a, 32a mit einer gemeinsamen Frequenz und das weitere erste Induktionsziel 52a mit einer Frequenz, die sich von der gemeinsamen Frequenz um mindestens 17 kHz unterscheidet. In einem dritten ersten Zeitteilbereich 30a t_{3, I} betreibt die Steuereinheit 12a die weiteren ersten Induktionsziele 32a, 52a mit Frequenzen, welche sich um mindestens 17 kHz unterscheiden und deaktiviert das erste Induktionsziel 14a.

Die Steuereinheit 12a betreibt von den dem zweiten Aufstellbereich 50a zugeordneten Induktionszielen 16a, 54a jeweils ein Induktionsziel 16a, 54a pro zweiten Zeitteilbereich 34a unter der Bedingung, dass das zweite und weitere zweite Induktionsziel 16a, 54a zeitlich überschneidungsfrei betrieben sind.

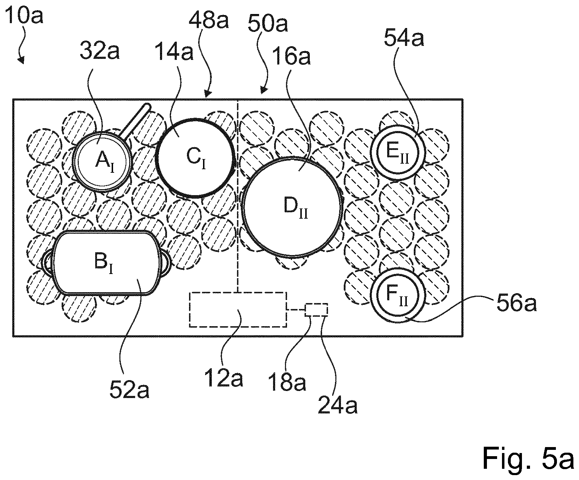

Fig. 5a zeigt die Gargerätevorrichtung mit einer beispielhaften fünften Induktionszielanordnung mit sechs Induktionszielen 14a, 16a, 32a, 52a, 54a, 56a. Ein erstes Induktionsziel 14a und zwei weitere erste Induktionsziele 32a, 52a sind dem ersten Aufstellbereich 48a zugeordnet. Ein zweites Induktionsziel 16a und zwei weitere zweite Induktionsziele 54a, 56a sind dem zweiten Aufstellbereich 50a zugeordnet.

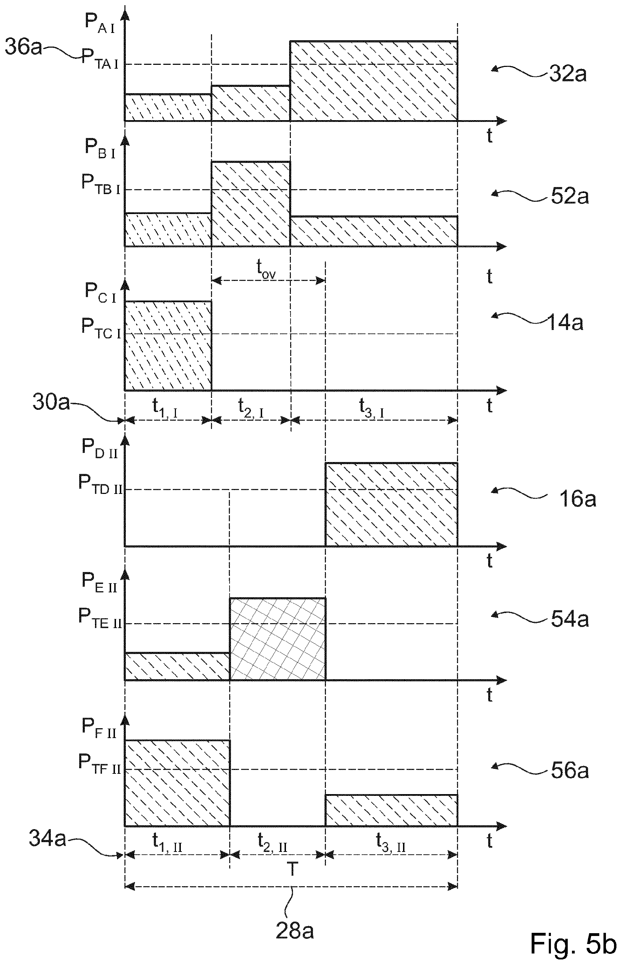

Fig. 5b zeigt ein beispielhaftes Diagramm einer Aktivierungssequenz der sechs Induktionsziele 14a, 16a, 32a, 52a, 54a, 56a der fünften Induktionszielanordnung.

Die Periodendauer 28a ist jeweils in drei erste, und drei zweite Zeitteilbereiche 30a, 34a aufgeteilt, wobei die ersten Zeitteilbereiche 30a dem ersten und zwei weiteren ersten Induktionszielen 14a, 32a, 52a und die zweiten Zeitteilbereiche 34a dem zweiten und zwei weiteren zweiten Induktionszielen 16a, 54a, 56a zugeordnet sind.

Angenommen, dass das erste und zweite Induktionsziel 14a, 16a sind miteinander magnetisch gekoppelt. Die Steuereinheit 12a betreibt das erste Induktionsziel 14a in einem ersten ersten Zeitteilbereich 30a t₁, _{I}. Die Steuereinheit 12a betreibt das zweite Induktionsziel 16a in einem dritten zweiten Zeitteilbereich 34a t_{3, II}. Der erste erste Zeitteilbereich 30a t_{1, I} und der dritte zweite Zeitteilbereich 34a t_{3, II} sind während der Periodendauer 28a zeitlich überschneidungsfrei angeordnet (vgl. Fig. 5b).

Die Steuereinheit 12a betreibt die dem ersten Aufstellbereich 48a zugeordneten Induktionsziele 14a, 32a, 52a in einem ersten ersten Zeitteilbereich 30a t_{1, I} mit einer gleichen Frequenz. In einem zweiten ersten Zeitteilbereich 30a t_{2, I} betreibt die Steuereinheit 12a die zwei weiteren ersten Induktionsziele 32a, 52a mit Frequenzen, die sich um mindestens 17 kHz unterscheiden, und deaktiviert das erste Induktionsziel 14a. In einem dritten ersten Zeitteilbereich 30a t_{3, I} betreibt die Steuereinheit 12a die weiteren ersten Induktionsziele 32a, 52a mit Frequenzen, welche sich um mindestens 17 kHz unterscheiden, und deaktiviert das erste Induktionsziel 14a.

Die Steuereinheit 12a betreibt in einem ersten zweiten Zeitteilbereich 34a t_{1, II} die zwei weiteren zweiten Induktionsziele 54a, 56a mit Frequenzen, die sich um mindestens 17 kHz unterscheiden, und deaktiviert das zweite Induktionsziel 16a.

Die Steuereinheit 12a betreibt in einem zweiten zweiten Zeitteilbereich 34a t_{2, II} das weitere zweite Induktionsziel 54a und deaktiviert das zweite Induktionsziel 16a und das weitere zweite Induktionsziel 56a.

Die Steuereinheit 12a betreibt in einem dritten zweiten Zeitteilbereich 34a t_{3, II} das zweite Induktionsziel 16a und das weitere zweite Induktionsziel 56a mit Frequenzen, die sich um mindestens 17 kHz unterscheiden, und deaktiviert das weitere zweite Induktionsziel 54a.

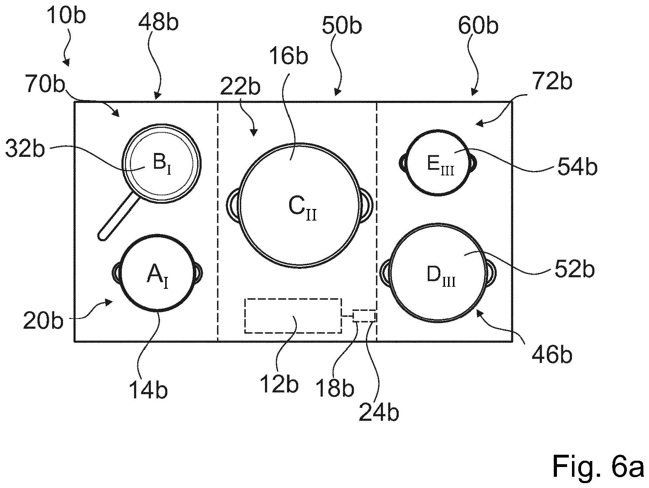

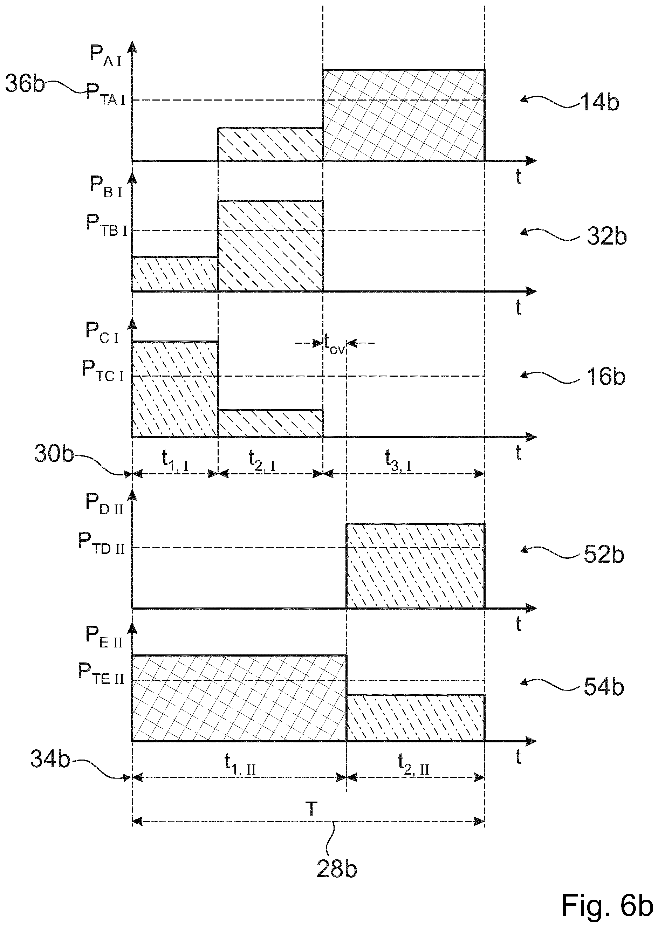

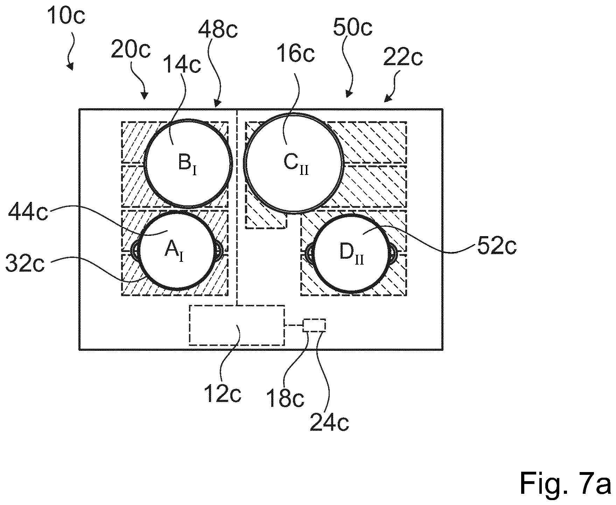

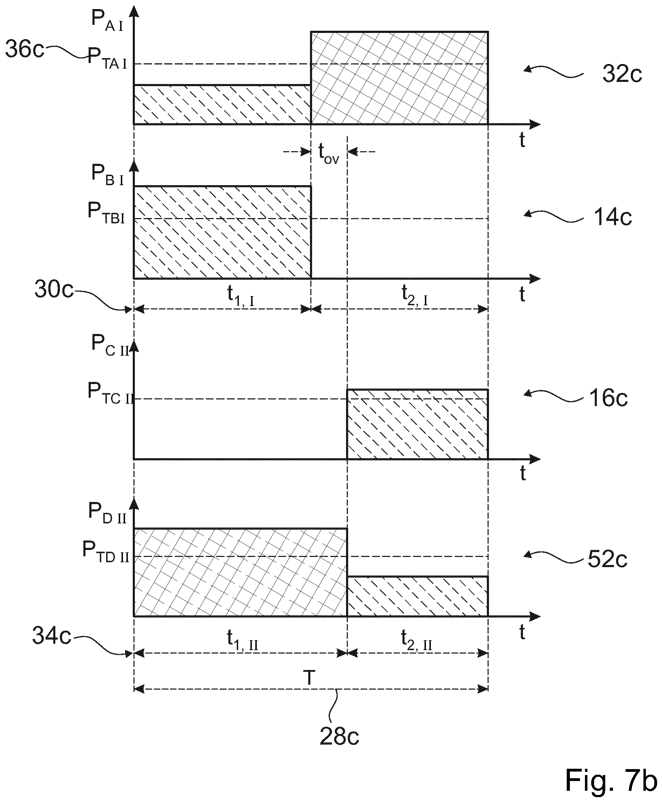

In Fig. 6a, 6b, 7a und 7b sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b und c in den folgenden Ausführungsbeispielen ersetzt.

Fig. 6a zeigt ein weiteres Kochfeld 38b mit einer Gargerätevorrichtung 10b mit einer weiteren beispielhaften Induktionszielanordnung.

Basierend auf auf der Aufstellplatte 42b aufgestellten Gargeschirren 44b definiert die Steuereinheit 12b Induktionsziele 14b, 16b, 32b, 52b, 54b. Die Induktionsziele 14b, 16b, 32b, 52b, 54b weisen jeweils einen Induktor 20b, 22b, 70b, 46b, 72b und ein über dem jeweiligen Induktor 20b, 22b, 70b, 46b, 72b platziertes Gargeschirr 44b auf. Die Induktoren 20b, 22b, 70b, 46b, 72b weisen jeweils eine unterschiedlich große kreisförmige Form auf.

Die Aufstellplatte 42b weist drei Aufstellbereiche 48b, 50b, 60b auf. Alle dem dritten Aufstellbereich 60b zugeordneten Induktionsziele 52b, 54b sind aus einer dritten Energiequelle mit einer elektrischen Energie versorgbar.

Fig. 6b zeigt ein beispielhaftes Diagramm einer Aktivierungssequenz der fünf Induktionsziele 14b, 16b, 32b, 52b, 54b der sechsten Induktionszielanordnung.

In der vorliegenden Induktionszielanordnung sind beispielsweise das erste und weitere erste Induktionsziele 14b, 32b dem ersten Aufstellbereich 48b zugeordnet. Das zweite Induktionsziel 16b ist dem zweiten Aufstellbereich 50b zugeordnet. Das dritte und weitere dritte Induktionsziel 52b, 54b sind dem dritten Aufstellbereich 60b zugeordnet.

Angenommen, dass das erste, zweite und dritte Induktionsziel 14b, 16b, 52b sind miteinander magnetisch gekoppelt, wobei das zweite Induktionsziel 16b räumlich zwischen dem ersten und dritten Induktionsziel 14b, 52b liegt.

Die Steuereinheit 12b fasst im vorliegenden Fall, den ersten und zweiten Aufstellbereich 48b, 50b und somit das erste, weitere erste und zweite Induktionsziel 14b, 32b, 16b zu einer gemeinsamen Gruppe zusammen.

Die Periodendauer 28b ist jeweils in drei erste und zwei zweite Zeitteilbereiche 30b, 34b aufgeteilt, wobei die ersten Zeitteilbereiche 30b dem ersten, weiteren ersten und zweiten Induktionsziel 14b, 32b, 16b,und die zweiten Zeitteilbereiche 34b dem dritten und weiteren dritten Induktionsziel 52b, 54b zugeordnet sind.

Die Steuereinheit 12b betreibt das zweite Induktionsziel 16b in einem ersten ersten und zweiten ersten Zeitteilbereich 30b t_{1, I}, t_{2, I}, wobei das dritte Induktionsziel 52b deaktiviert ist.

Die Steuereinheit 12b betreibt das dritte Induktionsziel 52b in einem zweiten zweiten Zeitteilbereich 34b t_{2, II}, wobei das zweite Induktionsziel 16b deaktiviert ist.

Der erste erste und zweite erste Zeitteilbereich 30b t_{1, I}, t_{2, I} und der zweite zweite Zeitteilbereich 34b t_{2, II} sind während der Periodendauer 28b zeitlich überschneidungsfrei angeordnet (vgl. Fig. 6b).

Die Steuereinheit 12b betreibt das weitere erste und zweite Induktionsziel 32b, 16b in dem ersten ersten Zeitteilbereich 30b t_{1, I} mit einer gemeinsamen Frequenz.

Die Steuereinheit 12b betreibt in einem zweiten ersten Zeitteilbereich 30b t_{2, I} das erste, weitere erste und zweite Induktionsziel 14b, 32b, 16b gleichzeitig. Die Steuereinheit 12b betreibt im zweiten ersten Zeitteilbereich 30b t_{2, I} das erste und weitere erste Induktionsziel 14b, 32b mit einer gemeinsamen Frequenz und das zweite Induktionsziel 16b mit einer von der gemeinsamen Frequenz um mindestens 17 kHz verschiedenen Frequenz.

Die Steuereinheit 12b betreibt in einem dritten ersten Zeitteilbereich 30b t_{3, I} das erste Induktionsziel 14b und deaktiviert das weitere erste und zweite Induktionsziel 32b, 16b.

Das zweite und das dritte Induktionsziel 16b, 52b sind von der Steuereinheit 12b zeitlich überschneidungsfrei betrieben.

Die Steuereinheit 12b betreibt in einem ersten zweiten Zeitteilbereich 34b t_{1, II} das weitere dritte Induktionsziel 54b und deaktiviert das dritte Induktionsziel 52b. Die Steuereinheit 12b betreibt in einem zweiten zweiten Zeitteilbereich 34b t_{2, II} das dritte und weitere dritte Induktionsziel 52b, 54b mit einer gemeinsamen Frequenz.

Fig. 7a zeigt ein weiteres Kochfeld 38c mit einer Gargerätevorrichtung 10c.

Basierend auf auf der Aufstellplatte 42c aufgestellten Gargeschirren 44c definiert die Steuereinheit 12c Induktionsziele 14c, 16c, 32c, 52c. Die Induktionsziele 14c, 32c, 52c weisen jeweils zwei Induktoren 20c, 22c auf und ein über den jeweiligen Induktoren 20c, 22c platziertes Gargeschirr 44c auf. Das Induktionsziel 16c weist drei Induktoren 22c auf und ein über den Induktoren 22c platziertes Gargeschirr 44c auf.

Die Induktoren 20c, 22c weisen jeweils eine im Wesentlichen rechteckige Kontur auf. Durch Platzieren eines Gargeschirrs 44c über einem oder mehreren Induktoren 20c, 22c oder einem Teil des Induktors 20c, 22c, wobei der Teil insbesondere wenigstens 10 % einer Gesamtausdehnung des Induktors 20c, 22c beträgt, sind die Induktoren 20c, 22c durch das Gargeschirr 44c belegt und von der Steuereinheit 12c aktivierbar. Die Steuereinheit 12c definiert den einen oder mehrere durch das Gargeschirr 44c belegten Induktoren 20c, 22c mit dem Gargeschirr 44c zu einem Induktionsziel. Insgesamt sind durch die Steuereinheit 12c vier Induktionsziele 14c, 16c, 32c, 52c definiert.

Die Aufstellplatte 42c weist zwei Aufstellbereiche 48c, 50c auf. Dem ersten Aufstellbereich 48c ist ein erstes und ein weiteres erstes Induktionsziel 14c, 32c zugeordnet.

Dem zweiten Aufstellbereich 50c ist ein zweites und ein weiteres zweites Induktionsziel 16c, 52c zugeordnet. Das zweite Induktionsziel 16c umfasst drei Induktoren 22c. Das weitere zweite Induktionsziel 52c umfasst zwei Induktoren 22c.

Angenommen, dass das erste und zweite Induktionsziel 14c, 16c sind miteinander magnetisch gekoppelt.

Fig. 7b zeigt ein beispielhaftes Diagramm einer Aktivierungssequenz der vier Induktionsziele 14c, 16c, 32c, 52c der siebten Induktionszielanordnung.

Die Periodendauer 28c ist jeweils in zwei erste, und zwei zweite Zeitteilbereiche 30c, 34c aufgeteilt, wobei die ersten Zeitteilbereiche 30c dem ersten und weiteren ersten Induktionsziel 14c, 32c, die zweiten Zeitteilbereiche 34c dem zweiten und weiteren zweiten Induktionsziel 16c, 52c zugeordnet sind.

Die Steuereinheit 12c betreibt das erste Induktionsziel 14c in einem ersten ersten Zeitteilbereich 30c t_{1, I}, wobei das zweite Induktionsziel 16c deaktiviert ist.

Die Steuereinheit 12c betreibt das zweite Induktionsziel 16c in einem zweiten zweiten Zeitteilbereich 34c t_{2, II}, wobei das erste Induktionsziel 14c deaktiviert ist.

Der erste erste Zeitteilbereich 30c t_{1, I} und der zweite zweite Zeitteilbereich 34c t_{2, II} sind während der Periodendauer 28c zeitlich überschneidungsfrei angeordnet (vgl. Fig. 7b).

Die Steuereinheit 12c betreibt das erste und weitere erste Induktionsziel 14c, 32c in einem ersten ersten Zeitteilbereich 30c t_{1, I} mit Frequenzen, welche sich um mindestens 17 kHz unterscheiden. Die Steuereinheit 12c betreibt das weitere erste Induktionsziel 32c in einem zweiten ersten Zeitteilbereich 30c t_{2, I} und deaktiviert das erste Induktionsziel 14c.

Die Steuereinheit 12c betreibt das weitere zweite Induktionsziel 52c in einem ersten zweiten Zeitteilbereich 34c t_{1, II} und deaktiviert das zweite Induktionsziel 16c. Die Steuereinheit 12c betreibt das zweite und weitere zweite Induktionsziel 16c, 52c in einem zweiten zweiten Zeitteilbereich 34c t_{2, II} mit Frequenzen, welche sich um mindestens 17 kHz unterscheiden.

### Bezugszeichen

- 10: Gargerätevorrichtung
- 12: Steuereinheit
- 14: erstes Induktionsziel
- 16: zweites Induktionsziel
- 18: Erfassungseinheit
- 20: erster Induktor
- 22: zweiter Induktor
- 24: Positionserfassungseinheit
- 26: Gargerät
- 28: Periodendauer
- 30: erster Zeitteilbereich
- 32: Induktionsziel
- 34: zweiter Zeitteilbereich
- 36: durchschnittliche Leistung
- 38: Kochfeld
- 40: Induktionskochfeld
- 42: Aufstellplatte
- 44: Gargeschirr
- 46: dritter Induktor
- 48: erster Aufstellbereich
- 50: zweiter Aufstellbereich
- 52: Induktionsziel
- 54: Induktionsziel
- 56: Induktionsziel
- 60: dritter Aufstellbereich
- 66: Matrixkochfeld
- 68: Gesamtausgangsleistung
- 70: Induktor
- 72: Induktor
- 74: drittes Induktionsziel

## Patentansprüche

1. Gargerätevorrichtung (10), insbesondere Kochfeldvorrichtung, mit einer Steuereinheit (12), welche zu einer Ansteuerung und Energieversorgung zumindest eines ersten Induktionsziels (14) aus einer ersten Energiequelle und zumindest eines zweiten Induktionsziels (16) aus einer zweiten Energiequelle vorgesehen ist, und mit einer Erfassungseinheit (18) zur Bestimmung einer Kopplungskenngröße einer Kopplung zwischen den Induktionszielen (14, 16), wobei die Steuereinheit (12) dazu vorgesehen ist, die Kopplungskenngröße auszuwerten und im Falle eines Vorhandenseins einer Kopplung zwischen dem ersten Induktionsziel (14) und dem zweiten Induktionsziel (16) in zumindest einen speziellen Betriebszustand überzugehen, um Kopplungsgeräusche wenigstens zu reduzieren durch zumindest eine spezielle Ansteuerung der Induktionsziele (14, 16), **gekennzeichnet durch** eine Positionserfassungseinheit (24) zur Erfassung einer Position von Gargeschirren (44) der Induktionsziele (14, 16), welche Teil der Erfassungseinheit (18) ist, wobei die Kopplungskenngröße eine erste Position des ersten Induktionsziels (14) und eine zweite Position des zweiten Induktionsziels (16) umfasst und wobei bei einem Unterschreiten eines Grenzabstands zwischen den Gargeschirren (44) ein Überschreiten eines festgelegten Grenzwerts der Kopplungskenngröße erfolgt.

2. Gargerätevorrichtung (10) nach Anspruch 1, **dadurch gekennzeichnet, dass** das erste Induktionsziel (14) zumindest einen ersten Induktor (20) aufweist, welcher Teil der Erfassungseinheit (18) ist.

3. Gargerätevorrichtung (10) nach Anspruch 2, **dadurch gekennzeichnet, dass** das zweite Induktionsziel (16) zumindest einen zweiten Induktor (22) aufweist, wobei die Erfassungseinheit (18) dazu vorgesehen ist, ein von dem zweiten Induktor (22) in den ersten Induktor (20) eingekoppeltes Signal als Kopplungskenngröße bereitzustellen.

4. Gargerätevorrichtung (10) nach einem der vorhergehenden Ansprüche, **dadurch gekennzeichnet, dass** die erste Energiequelle eine erste elektrische Stromphase eines Stromversorgungsnetzes und die zweite Energiequelle entweder die gleiche erste elektrische Stromphase eines Stromversorgungsnetzes oder eine zweite elektrische Stromphase des Stromversorgungsnetzes sind.

5. Gargerätevorrichtung (10) nach einem der vorhergehenden Ansprüche, **gekennzeichnet durch** zumindest eine erste Wechselrichtereinheit, welche Teil der ersten Energiequelle ist, und zumindest eine zweite Wechselrichtereinheit, welche Teil der zweiten Energiequelle ist.

6. Gargerätevorrichtung (10) nach einem der vorhergehenden Ansprüche, **dadurch gekennzeichnet, dass** die Steuereinheit (12) in dem speziellen Betriebszustand dazu vorgesehen ist, das erste Induktionsziel (14) periodisch mit einer ersten Periodendauer (28) zu betreiben, welche unterteilt ist in eine Anzahl von ersten Zeitteilbereichen (30), welche einer Anzahl von ersten Induktionszielen (14) entspricht.

7. Gargerätevorrichtung (10) nach Anspruch 6, **dadurch gekennzeichnet, dass** die Steuereinheit (12) in dem speziellen Betriebszustand dazu vorgesehen ist, das zweite Induktionsziel (16) periodisch mit einer zweiten Periodendauer (28) zu betreiben, welche unterteilt ist in eine Anzahl von zweiten Zeitteilbereichen (34), welche einer Anzahl von zweiten Induktionszielen (16) entspricht.

8. Gargerätevorrichtung (10) nach den Ansprüchen 6 und 7, **dadurch gekennzeichnet, dass** die erste Periodendauer der zweiten Periodendauer entspricht.

9. Gargerätevorrichtung (10) zumindest nach den Ansprüchen 6 und 7, **dadurch gekennzeichnet, dass** die Steuereinheit (12) in dem speziellen Betriebszustand dazu vorgesehen ist, in jedem ersten Zeitteilbereich (30) genau eines der ersten Induktionsziele (14) und in jedem zweiten Zeitteilbereich (34) genau eines der zweiten Induktionsziele (16) mit einem über einer jeweiligen durchschnittlichen Leistung (36) liegenden Leistungsüberschuss zu betreiben.

10. Gargerätevorrichtung (10) nach einem der vorhergehenden Ansprüche, **dadurch gekennzeichnet, dass** die Steuereinheit (12) in dem speziellen Betriebszustand dazu vorgesehen ist, das erste Induktionsziel (14) und das zweite Induktionsziel (16) zeitlich überschneidungsfrei anzusteuern.

11. Gargerät (26), insbesondere Kochfeld, mit zumindest einer Gargerätevorrichtung (10) nach einem der vorhergehenden Ansprüche.

12. Verfahren zum Betrieb einer Gargerätevorrichtung (10), insbesondere einer Kochfeldvorrichtung, insbesondere nach einem der Ansprüche 1 bis 10, bei welchem zumindest ein erstes Induktionsziel (14) aus einer ersten Energiequelle und zumindest ein zweites Induktionsziel (16) aus einer zweiten Energiequelle versorgt werden, eine Kopplungskenngröße einer Kopplung zwischen den Induktionszielen (14, 16) bestimmt wird, die Kopplungskenngröße ausgewertet wird und im Falle eines Vorhandenseins einer Kopplung zwischen dem ersten Induktionsziel (14) und dem zweiten Induktionsziel (16) in zumindest einen speziellen Betriebszustand übergegangen wird, um Kopplungsgeräusche wenigstens zu reduzieren durch zumindest eine spezielle Ansteuerung der Induktionsziele (14, 16), **dadurch gekennzeichnet, dass** eine Position von Gargeschirren (44) der Induktionsziele (14, 16) erfasst wird, wobei die Kopplungskenngröße eine erste Position des ersten Induktionsziels (14) und eine zweite Position des zweiten Induktionsziels (16) umfasst und wobei bei einem Unterschreiten eines Grenzabstands zwischen den Gargeschirren (44) ein Überschreiten eines festgelegten Grenzwerts der Kopplungskenngröße erfolgt.

## Claims

1. Cooking appliance device (10), in particular hob device, with a control unit (12), which is provided to control and supply power to at least one first induction target (14) from a first energy source and at least one second induction target (16) from a second energy source, and with a detection unit (18) for determining a coupling parameter of a coupling between the induction targets (14, 16), wherein the control unit (12) is provided to evaluate the coupling parameter and in the case that a coupling exists between the first induction target (14) and the second inductor target (16) to pass over into at least one special operating state in order at least to reduce coupling noises by means of a least one special control of the induction targets (14, 16), **characterised by** a position detection unit (24) for detecting a position of items of crockery (44) on the induction targets (14, 16), which is part of the detection unit (18), wherein the coupling parameter comprises a first position of the first induction target (14) and a second position of the second induction target (16) and wherein when a limit distance is not met between the items of crockery (44), a defined limit value of the coupling parameter is exceeded.

2. Cooking appliance device (10) according to claim 1, **characterised in that** the first induction target (14) has at least one first inductor (20), which is part of the detection unit (18).

3. Cooking appliance device (10) according to claim 2, **characterised in that** the second induction target (16) has at least one second inductor (22), wherein the detection unit (18) is provided to provide a signal injected from the second inductor (22) into the first inductor (20) as a coupling parameter.

4. Cooking appliance device (10) according to one of the preceding claims, **characterised in that** the first energy source is a first electric current phase of a power supply network and the second energy source is either the same first electric current phase of a power supply network or a second electric current phase of the power supply network.

5. Cooking appliance device (10) according to one of the preceding claims, **characterised by** at least one first inverter unit, which is part of the first energy source, and at least one second inverter unit, which is part of the second energy source.

6. Cooking appliance device (10) according to one of the preceding claims, **characterised in that** the control unit (12) is provided in the special operating state to periodically operate the first induction target (14) with a first cycle duration (28), which is subdivided into a number of first time subregions (30), which corresponds to a number of first induction targets (14).

7. Cooking appliance device (10) according to claim 6, **characterised in that** the control unit (12) is provided in the special operating state to operate the second induction target (16) periodically with a second cycle duration (28), which is subdivided into a number of second time subregions (34), which corresponds to a number of second induction targets (16).

8. Cooking appliance device (10) according to claims 6 and 7, **characterised in that** the first cycle duration corresponds to the second cycle duration.

9. Cooking appliance device (10) at least according to claims 6 and 7, **characterised in that** the control unit (12) is provided in the special operating state to operate precisely one of the first induction targets (14) in each first time subregion (30) and to operate precisely one of the second induction targets (16) in each second time subregion (34) with an excess of power which lies above a respective average power (36).

10. Cooking appliance device (10) according to one of the preceding claims, **characterised in that** the control unit (12) is provided in the special operating state to control the first induction target (14) and the second induction target (16) over time without overlap.

11. Cooking appliance (26), in particular hob, with at least one cooking appliance device (10) according to one of the preceding claims.

12. Method for operating a cooking appliance device (10), in particular a hob device, in particular according to one of claims 1 to 10, in which at least one first induction target (14) and at least one second induction target (16) are supplied from a first energy source and from a second energy source in each instance, a coupling parameter of a coupling is determined between the induction targets (14, 16), the coupling parameter is evaluated and in the case of a coupling existing between the first induction target (14) and the second induction target (16) at least one special operating state is assumed in order at least to reduce coupling noises by means of at least one special control of the induction targets (14, 16), **characterised that** a position of the items of crockery (44) of the induction targets (14, 16) is detected, wherein the coupling parameter comprises a first position of the first induction target (14) and a second position of the second induction target (16) and wherein if a limit distance between the items of crockery (44) is not met, a defined limit value of the coupling parameter is exceeded.

## Revendications

1. Dispositif formant appareil de cuisson (10), en particulier dispositif formant table de cuisson, comprenant une unité de commande (12) prévue afin de piloter et de fournir de l'énergie à au moins une première cible d'induction (14) à partir d'une première source d'énergie et à au moins une seconde cible d'induction (16) à partir d'une seconde source d'énergie, et comprenant une unité de détection (18) permettant de déterminer une grandeur caractéristique de couplage d'un couplage entre les cibles d'induction (14, 16), dans lequel l'unité de commande (12) est prévue afin d'évaluer la grandeur caractéristique de couplage et, en cas de présence d'un couplage entre la première cible d'induction (14) et la seconde cible d'induction (16) de passer à au moins un état de fonctionnement particulier afin d'au moins réduire les bruits de couplage grâce à au moins un pilotage particulier des cibles d'induction (14, 16), **caractérisé par** une unité de détection de position (24) permettant de détecter une position d'ustensiles de cuisson (44) des cibles d'induction (14, 16) et faisant partie de l'unité de détection (18), dans lequel la grandeur caractéristique de couplage comprend une première position de la première cible d'induction (14) et une seconde position de la seconde cible d'induction (16) et dans lequel un dépassement d'une valeur limite définie de la grandeur caractéristique de couplage intervient lorsqu'une distance limite entre les ustensiles de cuisson (44) n'est pas atteinte.

2. Dispositif formant appareil de cuisson (10) selon la revendication 1, **caractérisé en ce que** la première cible d'induction (14) présente au moins un premier inducteur (20) faisant partie de l'unité de détection (18).

3. Dispositif formant appareil de cuisson (10) selon la revendication 2, **caractérisé en ce que** la seconde cible d'induction (16) comprend au moins un second inducteur (22), dans lequel l'unité de détection (18) est prévue afin de fournir un signal couplé dans le premier inducteur (20) à partir du second inducteur (22) et faisant office de grandeur caractéristique de couplage.

4. Dispositif formant appareil de cuisson (10) selon l'une quelconque des revendications précédentes, **caractérisé en ce que** la première source d'énergie est une première phase de courant électrique d'un réseau d'alimentation en énergie et la seconde source d'énergie est la même première phase de courant électrique d'un réseau d'alimentation en énergie ou une seconde phase de courant électrique du réseau d'alimentation en énergie.

5. Dispositif formant appareil de cuisson (10) selon l'une quelconque des revendications précédentes, **caractérisé par** au moins une première unité de conversion faisant partie de la première source d'énergie et au moins une seconde unité de conversion faisant partie de la seconde source d'énergie.

6. Dispositif formant appareil de cuisson (10) selon l'une quelconque des revendications précédentes, **caractérisé en ce que** l'unité de commande (12), dans l'état de fonctionnement particulier, est prévue afin de faire fonctionner la première cible d'induction (14) de manière périodique avec une première durée de période (28) subdivisée en un certain nombre de premières sous-régions temporelles (30) qui correspond à un certain nombre de premières cibles d'induction (14).

7. Dispositif formant appareil de cuisson (10) selon la revendication 6, **caractérisé en ce que** l'unité de commande (12), dans l'état de fonctionnement particulier, est prévue afin de faire fonctionner la seconde cible d'induction (16) de manière périodique avec une seconde durée de période (28) subdivisée en un certain nombre de secondes sous-régions temporelles (34) qui correspond à un certain nombre de secondes cibles d'induction (16).

8. Dispositif formant appareil de cuisson (10) selon les revendications 6 et 7, **caractérisé en ce que** la première durée de période correspond à la seconde durée de période.

9. Dispositif formant appareil de cuisson (10) au moins selon les revendications 6 et 7, **caractérisé en ce que** l'unité de commande (12) est prévue, dans l'état de fonctionnement particulier, afin de faire fonctionner exactement une des premières cibles d'induction (14) dans chaque première sous-région temporelle (30) et exactement une des secondes cibles d'induction (16) dans chaque seconde sous-région temporelle (34) avec un excédent de puissance supérieur à une puissance moyenne (36) respective.

10. Dispositif formant appareil de cuisson (10) selon l'une quelconque des revendications précédentes, **caractérisé en ce que** l'unité de commande (12) est prévue, dans l'état de fonctionnement particulier, afin de piloter la première cible d'induction (14) et la seconde cible d'induction (16) sans chevauchement temporel.

11. Appareil de cuisson (26), en particulier table de cuisson, avec au moins un dispositif formant appareil de cuisson (10) selon l'une quelconque des revendications précédentes.

12. Procédé de fonctionnement d'un dispositif formant appareil de cuisson (10), en particulier d'un dispositif formant table de cuisson, en particulier selon l'une quelconque des revendications 1 à 10, dans lequel au moins une première cible d'induction (14) est alimentée à partir d'une première source d'énergie et au moins une seconde cible d'induction (16) est alimentée à partir d'une seconde source d'énergie, une grandeur caractéristique de couplage d'un couplage entre les cibles d'induction (14, 16) est déterminée, la grandeur caractéristique de couplage est évaluée et un passage à au moins un état de fonctionnement particulier intervient en cas de présence d'un couplage entre la première cible d'induction (14) et la seconde cible d'induction (16) afin d'au moins réduire les bruits de couplage grâce à au moins un pilotage particulier des cibles d'induction (14, 16), **caractérisé en ce qu'**une position des ustensiles de cuisson (44) des cibles d'induction (14, 16) est détectée, dans lequel la variable caractéristique de couplage comprend une première position de la première cible d'induction (14) et une seconde position de la seconde cible d'induction (16), et dans lequel un dépassement d'une valeur limite définie de la grandeur caractéristique de couplage intervient lorsqu'une distance limite entre les ustensiles de cuisson (44) n'est pas atteinte.
